# EUROPÄISCHE PATENTSCHRIFT

(11) **EP 4 148 557 B1**
(45) Veröffentlichungstag und Bekanntmachung des Hinweises auf die Patenterteilung: **11.06.2025**
(21) Anmeldenummer: 22194657.7
(22) Anmeldetag: 08.09.2022
(51) Int. Cl.: G06F 8/34, G06F 8/41

(54) **VERFAHREN ZUR ERZEUGUNG VON QUELLCODE**
METHOD FOR GENERATING SOURCE CODE
PROCÉDÉ DE GÉNÉRATION DE CODE SOURCE

(30) Priorität: 10.09.2021 DE 102021123501
(43) Veröffentlichungstag der Anmeldung: 15.03.2023
(73) Patentinhaber: dSPACE GmbH, 33102 Paderborn (DE)
(72) Erfinder: Mair, Michael, 33102 Paderborn (DE)

(56) Entgegenhaltungen:
- EP-A1- 2 418 577
- EP-A1- 3 438 817
- US-A1- 2018 088 911

## Beschreibung

Die Erfindung betrifft die Erzeugung von ausführbarem Code aus einem Blockdiagramm, insbesondere für die Programmierung von Steuergeräten.

Steuergeräte werden in einer Vielzahl von Anwendungen eingesetzt, um physikalische Größen eines Prozesses zu erfassen und/oder mittels angeschlossener Aktuatoren auf einen Prozess einzuwirken; beispielsweise kann es sich um eine Antiblockierregelung eines Bremsvorgangs handeln. Die das dynamische Verhalten des Prozesses bestimmenden Zeitkonstanten bedingen häufig Zykluszeiten von 1 ms oder kürzer, so dass eine Echtzeitfähigkeit des Steuergeräts erforderlich ist. Aus Kostengründen weisen Steuergeräte häufig Mikrocontroller mit geringem Speicher und beschränkter Rechenleistung auf, weshalb der Größe und Effizienz des ausführbaren Codes eine große Bedeutung zukommt.

Um den Entwurf von Steuergeräten zu beschleunigen, werden Kontrollstrategien häufig anhand von Modellen in einer Rechenumgebung wie MATLAB/Simulink entwickelt. Somit können Prozess und/oder Regler bzw. allgemein das Verhalten des Steuergeräts zunächst simuliert und das Vorliegen von gewünschten Eigenschaften überprüft werden. Bei den Modellen kann es sich insbesondere um Blockdiagramme handeln, welche Blöcke umfassen, die Operationen wie Berechnungen ausführen, wobei ein Block beispielsweise aus mehreren Eingangssignalen ein Ausgangssignal berechnen kann. In der Regel werden Blockdiagramme zyklisch ausgeführt, wobei alle Blöcke dauerhaft im Speicher gehalten werden und jeder Block einmal pro Zeitschritt ausgeführt wird. Insbesondere kann ein Block in jedem Zeitschritt auf Eingangssignale aus dem Vorgängerblock eine oder mehrere Operationen anwenden, um Ausgangssignale des aktuellen Schritts zu erzeugen. Blockdiagramme können zusätzlich auch ein Teilmodell zur Beschreibung eines diskreten Verhaltens umfassen, in dem eine Anzahl von Zuständen und Übergangsbedingungen definiert sind. Aus den Modellen kann mittels eines Codegenerators direkt Quellcode für die Programmierung des Steuergeräts erzeugt werden. Beispielsweise ist aus dem Dokument "Production Quality Code Generation from Simulink Block Diagrams", Proceedings of the 1999 International Symposium on Computer Aided Control System Design, Kohala Coast, Hawai'i, von H. Hanselmann et al. ein Codegenerator für die Erzeugung von Quellcode in Produktionsqualität bekannt.

Wenn Modelle in Form eines Blockdiagramms beschrieben werden, wobei Blöcke zum Austausch von Daten bzw. dem Weiterleiten von Signalen über gerichtete Verbindungen bzw. Signalverbindungen verknüpft sind, besteht ein übliches Vorgehen der Codeerzeugung darin, für jeden Ausgang eines Blocks eine Variable im Quellcode zu erzeugen. Allerdings hat dies den Nachteil, dass in der Regel dabei zunächst mehr Blockvariablen entstehen, als wirklich erforderlich sind. Durch eine anschließende Optimierung kann die Anzahl von Blockvariablen bzw. allgemein die Codegröße verringert werden. So ist es aus der EP 2418577 A1 bekannt, ein Blockdiagramm in eine Zwischendarstellung zu transformieren und auf diese Zwischendarstellung mindestens eine Optimierung anzuwenden, um eine optimierte Zwischendarstellung zu erzeugen. Eine Vielzahl an weiteren Optimierungen, die an sich aus dem Compilerbau bekannt sind, kann nacheinander angewandt werden, um weiter optimierte Zwischendarstellungen zu erzeugen. Anschließend wird aus der optimierten Zwischendarstellung insbesondere C-Code erzeugt.

Da jede Optimierung in einer veränderten Zwischendarstellung resultiert, kann es von der Reihenfolge der Optimierungsschritte abhängen, in welchem Maße der Code insgesamt optimiert wird. So kann ein zwischen zwei Verarbeitungsblöcken liegender Funktionsaufruf, über den keine weiteren Informationen lokal verfügbar sind, eine Optimierung unmöglich machen. Bei mehrkomponentigen Variablen wirken sich solche Optimierungsschwächen besonders stark aus, da hier bereits ein einfaches Umkopieren mit einem hohen Speicherverbrauch und einer beträchtlichen Ausführungszeit einhergehen kann. Beispielsweise kann das Umkopieren eines Vektors bzw. einer Matrix als eine Zuweisung der gesamten Variablen, über Zuweisungen in Schleifen oder über elementweise Zuweisungen erfolgen, so dass in der Zwischendarstellung selbst eine an sich gleiche Operation nicht immer als solche zu erkennen ist.

Aus der EP3438817A1 ist ein Verfahren zum Erzeugen von Quellcode aus einem oder mehreren Blöcken eines Blockdiagramms bekannt, bei dem für zwei Blöcke, die jeweils eine Blockvariable aufweisen, der Bezeichner der Blockvariablen verglichen wird und zusätzlich überprüft wird, ob der erste Block und der zweite Block in einer Region liegen. Nur wenn beide Bedingungen erfüllt sind, werden die Blockvariablen als eine einzige Variable implementiert. Indem ein Zusammenfassen von Variablen in semantisch unkorrelierten Bereichen ausgeschlossen wird, lassen sich schwer zu findende Seiteneffekte vermeiden.

Für den Fall eines Schreibens auf ein spezielles Medium, wie insbesondere einen Flash-Speicher mit einer begrenzten Anzahl möglicher Schreibvorgänge, schlägt die US 2018/088911 A1 vor, zu prüfen ob eine Blockgruppe durch eine Zuweisungsoperation nur für Teile einer mehrkomponentigen Variablen in einer Wertänderung resultiert, und dann Schreibanweisungen nur für die einzelnen betroffenen Elemente zu generieren. Es erfolgt also die Erkennung einer speziellen Blockgruppe und eine für diese Konstellation passende Modifikation des generierten Codes. Allerdings können ein erhöhter Speicherbedarf und eine längere als eigentlich erforderliche Ausführungszeit für eine Vielzahl von Blockgruppen bzw. Operationen auftreten, die nicht in dieses spezielle Schema fallen.

Vor diesem Hintergrund ist es eine Aufgabe der vorliegenden Erfindung, den Stand der Technik weiterzuentwickeln und insbesondere eine Erzeugung von kompakterem Quellcode unter Vermeidung von unerwünschten Seiteneffekten zu unterstützen.

Diese Aufgabe wird durch ein Verfahren zum Erzeugen von Quellcode nach Anspruch 1, ein Computerprogrammprodukt nach Anspruch 11 und ein Computersystem nach Anspruch 12 gelöst. Vorteilhafte Weiterbildungen sind Gegenstand der abhängigen Unteransprüche.

Es wird also ein Verfahren zum Erzeugen von Quellcode aus einem oder mehreren Blöcken eines Blockdiagramms bereitgestellt, welches mindestens zwei nichtvirtuelle Blöcke und mindestens eine Signalverbindung zwischen zwei nichtvirtuellen Blöcken umfasst, wobei das Erzeugen von Quellcode ein Transformieren des Blockdiagramms in eine Zwischendarstellung, ein sukzessives Optimieren der Zwischendarstellung und ein Übersetzen der optimierten Zwischendarstellung in Quellcode umfasst, wobei das Transformieren eines nichtvirtuellen Blocks das Erstellen eines Bezugs auf eine Blockausgangsvariable umfasst. Erfindungsgemäß umfasst das Transformieren für einen ersten Block mit einem Zugriff auf eine mehrkomponentige Variable eine Prüfung daraufhin, ob ein Blockpaar aus diesem Block und einem benachbarten Block eine wertgleiche Zuweisung umfasst, wobei das Blockpaar entweder aus dem ersten Block und dessen Vorgänger oder aus dem ersten Block und dessen Nachfolger besteht, und wobei eine wertgleiche Zuweisung dann vorliegt, wenn zumindest ein Teil der mehrkomponentigen Variable eines Blocks des Blockpaars unverändert in einen Teil der mehrkomponentigen Variable des anderen Blocks des Blockpaars kopiert wird. Bei Vorliegen einer wertgleichen Zuweisung erfolgt eine Ersetzung von Variablenbezügen, bei der entweder ein Bezug auf den Teil der Variable des einen Blocks des Blockpaars durch einen Bezug auf den entsprechenden Teil der Variable des anderen Blocks des Blockpaars ersetzt wird oder der Bezug auf eine Ausgangsvariable des ersten Blocks durch den Bezug auf eine Datenspeicher-Variable ersetzt wird. Weiterhin umfasst das Transformieren ein Entfernen solcher Zuweisungen, bei denen auf beiden Seiten ein Bezug auf dieselbe Variable steht.

Über eine Signalverbindung können Daten bzw. Signale übertragen werden; hierbei gibt ein erster Block einen Wert oder je nach Definition mehrere zusammengehörige Werte aus und ein zweiter Block empfängt diese und berücksichtigt sie bei der Ermittlung von einem oder mehreren zusammengehörigen Ausgabewerten des zweiten Blocks. Signale können skalare Variablen und/oder strukturierte Datentypen wie Arrays enthalten, wie dies beispielsweise bei einem Bus der Fall ist. Wenn ein Block den Zugriff auf eine mehrkomponentige Variable umfasst, kann die Einsparung dieser Variablen eine beträchtliche Einsparung an Speicherplatz und an Ausführungszeit ermöglichen, beispielsweise indem Instruktionen für das Umkopieren der einzelnen Komponenten bzw. Elemente der Variablen nicht im Code generiert werden und dementsprechend auch nicht zur Laufzeit ausgeführt werden müssen. Die mehrkomponentige Variable kann ein Vektor, der eine Vielzahl von Variablen desselben Datentyps umfasst, eine Matrix, die eine Vielzahl von Vektoren umfasst, eine Struktur, die eine Vielzahl von Variablen beliebigen Datentyps umfasst, oder ein Vektor oder eine Matrix von Strukturen sein.

Der Schritt des Transformierens kann eine Mehrzahl von Teilschritten beinhalten, wie das Überprüfen einer Anzahl von Regeln und das Anfügen von weiteren Codegenerierungsinformationen. Die erfindungsgemäße Optimierung kann prinzipiell in einem beliebigen Zwischenschritt des Transformierens erfolgt. In der Zwischendarstellung wurden die Blöcke in Anweisungen mit fester Ausführungsreihenfolge übersetzt, wodurch die Struktur semantisch eine textuelle Programmiersprache abbildet (entsprechend C-Code). Bei der unverändert kopierten Variablen kann es sich auch um eine Konstante handeln.

Mit einem virtuellen Block ist ein Block gemeint, der nur der Strukturierung des Blockdiagramms dient, aber keinen direkten Einfluss auf die Simulation hat. So handelt es sich beispielsweise bei einem Mux- oder Demux-Block, der mehrere Signale zu einem virtuellen Vektor zusammenfasst oder ein Elementsignal eines virtuellen Vektors extrahiert, um virtuelle Blöcke. Verarbeitungsblöcke, die einen Ausgangswert berechnen und/oder eine Zuweisung zumindest an Teile eines Signals vornehmen, stellen nichtvirtuelle Blöcke dar. Bei dem Bezug auf einen Block kann es sich insbesondere um einen Namen des Blocks handeln. Blockvariablen können explizit im Block definiert sein oder automatisch erzeugt werden, beispielsweise anhand einer Signalverbindung, wo zu einem Ausgangssignal eines Blocks zweckmäßigerweise eine Blockvariable, also eine Blockausgangsvariable, erzeugt wird. Die Bezeichner bzw. Namen von Blockvariablen können fest vorgegeben oder anhand von Erzeugungsvorschriften definiert sein. So kann der Bezeichner einer Blockausgangsvariablen den Namen des Blocks und/oder den Namen des Ports in dem Block umfassen, von dem das Signal ausgeht. Dadurch, dass erfindungsgemäß der Signalfluss im Blockdiagramm verfolgt wird und nicht bloß Variablennamen einer Zwischendarstellung verglichen werden, ist eine Optimierung unabhängig von Namenskonventionen bzw. Erzeugungsvorschriften möglich.

Vorteilhafterweise identifiziert das erfindungsgemäße Verfahren unterschiedliche Blockpaare bzw. Blockgruppen und Blockvariablen, die zu wertgleichen Zuweisungen führen, und überschreibt jeweils eine der Variablen des identifizierten Blockpaars, um Zuweisungen zwischen der gleichen Variable bzw. den gleichen Variablenteilen zu provozieren, die dann bei dem Erzeugen der Zwischendarstellung erst gar nicht angelegt werden müssen, oder Zuweisungen des gleichen Wertes auf die gleiche Variable vorzunehmen, so dass zumindest eine der Variablen entfällt. Dadurch wird nicht nur insgesamt effizienterer Code erzeugt, sondern auch die Optimierung auf der Zwischendarstellung beschleunigt, da bereits zu Beginn weniger Variablen bzw. Codemuster betrachtet werden müssen.

Ausgehend von einem ersten Block mit einem Zugriff auf eine mehrkomponentige Variable wird beim Transformieren des Blockdiagramms überprüft, ob ein Blockpaar aus diesem Block und einem benachbarten Block eine wertgleiche Zuweisung umfasst. Das Blockpaar kann entweder aus dem ersten Block und dessen Vorgänger oder aus dem ersten Block und dessen Nachfolger bestehen. Eine wertgleiche Zuweisung liegt dann vor, wenn zumindest ein Teil der mehrkomponentigen Variable eines Blocks des Blockpaars unverändert in einen Teil der mehrkomponentigen Variable des anderen Blocks des Blockpaars kopiert wird. Es kann auch vorkommen, dass die gesamte mehrkomponentige Variable unverändert kopiert wird, wobei also der Teil 100% bzw. die gesamte Variable umfasst. Das Verfahren ist gleichermaßen für Variablen wie für korrespondierende Variablenteile anwendbar, also den Teil der Blockvariable des einen Blocks, der unverändert kopiert wird, und den Teil der Blockvariable des anderen Blocks, der die unveränderten Komponenten empfängt.

Wird also ein Teil der mehrkomponentigen Variable des im Signalfluss ersten Blocks des Blockpaars unverändert in einen Teil der mehrkomponentigen Variable des im Signalfluss folgenden Blocks kopiert, so liegt eine wertgleiche Zuweisung vor. Dann erfolgt eine Ersetzung von Variablenbezügen, bei der entweder ein Bezug auf den Teil der Variable des im Signalfluss ersten Blocks des Blockpaars durch einen Bezug auf den entsprechenden Teil der Variable des im Signalfluss folgenden Blocks des Blockpaars ersetzt wird, oder der Bezug auf eine Ausgangsvariable des ersten Blocks durch den Bezug auf eine Datenspeicher-Variable ersetzt wird, wobei die Art der Ersetzung von den Blocktypen der beiden Blöcke des Blockpaars abhängt. Weiterhin umfasst das Transformieren ein Entfernen solcher Zuweisungen, bei denen auf beiden Seiten ein Bezug auf dieselbe Variable bzw. denselben Variablenteil steht.

Bevorzugt werden einer oder mehrere der folgenden Typen von Blöcken auf eine wertgleiche Zuweisung geprüft:
- Ein DataStore-Read-Block, der aus einer Datenspeicher-Variablen liest,
- ein DataStore-Write-Block, der in eine Datenspeicher-Variable schreibt,
- ein Switch-Block, der einen Ausgang mit einem von mehreren Eingängen selektiv verbindet,
- ein Bus-Outport-Block, der eine Ausgabe an einen Bus modelliert,
- ein Outport-Block, der eine Ausgabe modelliert, und/oder
- ein Delay-Block, der ein Eingangssignal um einen Zeitschritt verzögert wieder ausgibt.

Hierbei wird vorzugsweise im Falle eines DataStore-Read-Blocks dieser zusammen mit dem Folgeblock betrachtet, und bei Vorliegen einer wertgleichen Zuweisung ein Bezug auf eine Ausgangsvariable des DataStore-Read-Blocks durch einen Bezug auf den entsprechenden Teil der Datenspeicher-Variable ersetzt, und/oder im Falle eines DataStore-Write-Blocks, Switch-Blocks, Bus-Outport-Blocks, Outport-Blocks und/oder Delay-Blocks dieser zusammen mit dem Vorgängerblock betrachtet, und bei Vorliegen einer wertgleichen Zuweisung ein Bezug auf eine Ausgangsvariable des Vorgängerblocks durch einen Bezug auf eine Variable des ersten Blocks ersetzt. Ein Ausgang des Vorgängerblocks ist über ein Signal direkt mit einem Eingang des Folgeblocks verbunden. Bei der (Block-)Ausgangsvariable des DataStore-Read-Blocks kann es sich um eine Puffervariable oder die Datenspeicher-Variable bzw. die DataStore-Memory-Variable handeln. Bei einem DataStore-Write-Block wird zweckmäßigerweise eine (Block-)Ausgangsvariable des Vorgängerblocks durch die Datenspeicher-Variable bzw. den entsprechenden Teil der Datenspeicher-Variable ersetzt.

Anhand von Blockeigenschaften wird also eine wertgleiche Zuweisung identifiziert, die eine Optimierung ermöglicht. Eine erfindungsgemäße Optimierung ist auch für komplexe Signale bzw. mehrkomponentige Blockvariablen einfach bzw. unabhängig von der Anzahl von Komponenten auf gleiche Weise möglich. Hierbei müssen nur einige wenige Regeln überprüft werden, die wenige Blöcke und an diese angeschlossene Signale betreffen. Dadurch wird es möglich, die Korrektheit der Teilschritte einfach nachzuweisen, und es sicherzustellen, dass eine gleiche Modellierung auch zu gleichermaßen effizientem Code führt.

Wenn ein Blockdiagramm eine Vielzahl von Blöcken umfasst, deren Blocktyp einem auf eine wertgleiche Zuweisung zu prüfenden Blocktyp entspricht, erfolgt vorzugsweise für jeden Block der Vielzahl von Blöcken entsprechend des Blocktyps eine Prüfung auf eine wertgleiche Zuweisung, und bei Vorliegen einer wertgleichen Zuweisung eine Ersetzung von Variablenbezügen.

Eine mögliche Ersetzung wird zweckmäßigerweise für alle im Blockdiagramm vorhandenen Blöcke passenden Typs geprüft, wobei insbesondere für einen der Blöcke alle in Frage kommenden Blockpaare aus dem Block und einen im Signalfluss benachbarten Block, insbesondere direkt benachbarten Blocks, das Vorliegen einer wertgleichen Zuweisung überprüft wird und in dem Fall ein Ersetzen der entsprechenden Bezüge auf Variablen erfolgt. Je nach Typ des Blocks wird zweckmäßigerweise der Vorgänger- oder der Nachfolger-Block als Teil des Blockpaars betrachtet. Zur Ermittlung von Nachbarschaftsbeziehungen können virtuelle Blöcke übersprungen werden.

Bevorzugt sind Blockdiagramme hierarchisch definiert, wobei ein Block in einer höheren Ebene mehrere Blöcke einer untergeordneten Ebene umfassen kann, wobei Blöcke einer untergeordneten Ebene einem Block einer höheren Ebene zugeordnet sind, und wenn ein DataStore-Read-Block auf eine wertgleiche Zuweisung geprüft wird, wird in einem umfassenden hierarchischen Block, insbesondere atomaren hierarchischen Block, nach DataStore-Write-Blöcken gesucht, die auf dieselbe Datenspeicher-Variable zugreifen.

Besonders bevorzugt wird, sofern ein DataStore-Read-Block und ein DataStore-Write-Block mit Zugriff auf dieselbe Datenspeicher-Variable in dem umfassenden hierarchischen Block gefunden wurden, überprüft, ob der DataStore-Read-Block und der DataStore-Write-Block zumindest teilweise im Signalfluss verbunden sind, so dass der Teil der Datenspeicher-Variablen, welcher im DataStore-Read-Block gelesen wird, eine nichtleere Schnittmenge mit dem Teil der Datenspeicher-Variablen aufweist, welcher im DataStore-Write-Block geschrieben wird, wobei mindestens ein Block im Signalfluss zwischen dem DataStore-Read-Block und dem DataStore-Write-Block liegt, wobei der oder die dazwischen liegenden Blöcke mindestens einen nichtvirtuellen Verarbeitungsblock umfassen, der eine Eingangsvariable verarbeitet, um eine Ausgangsvariable zu erzeugen. Als eine Zusatzbedingung wird überprüft, ob der oder die dazwischen liegenden Blöcke eine solche Abarbeitungsreihenfolge aufweisen, dass der mindestens eine Verarbeitungs-block vor dem Data-Store-Write-Block ausgeführt wird, und wenn diese Zusatzbedingung erfüllt ist, wird der der Schnittmenge entsprechende Anteil der Ausgangsvariable des DataStore-Read-Blocks durch den der Schnittmenge entsprechenden Anteil der Datenspeicher-Variablen ersetzt.

Wenn der DataStore-Read-Block und der auf dieselbe Datenspeicher-Variable zugreifende DataStore-Write-Block nicht im Signalfluss verbunden sind, können die Blöcke unabhängig voneinander auf das Vorliegen einer wertgleichen Zuweisung überprüft werden. Eine Signalflussverbindung kann nur dann vorliegen, wenn der Teil der Datenspeicher-Variablen, aus dem im DataStore-Read-Block gelesen wird, eine nichtleere Schnittmenge zu dem Teil der Datenspeicher-Variablen aufweist, in den im DataStore-Write-Block geschrieben wird. Die Schnittmenge ist dann leer, wenn auf andere Komponenten der Variable zugegriffen wird, es sich also beispielsweise um andere Elemente eines Vektors oder in der Bushierarchie parallele Anteile handelt; für eine Struktur S hätte beispielsweise S.a eine nichtleere Schnittmenge mit S.a.b, aber keine Schnittmenge mit S.c.b. Eine Verarbeitung kann auch eine Zuweisung eines neuen Werts an Teile einer Variablen sein, so dass auch ein Block, der ein dynamisches Assignment macht, in diesem Sinne einen Verarbeitungsblock darstellt. Wenn mehre DataStore-Write-Blöcke in dem umfassenden hierarchischen Block auf dieselbe Datenspeicher-Variable wie der DataStore-Read-Block zugreifen, wird das Vorliegen einer Vorwärts-Datenflussbeziehung, also das sicher erst aus der Datenspeicher-Variablen gelesen wird, bevor in die Datenspeicher-Variable geschrieben wird, für jeden der DataStore-Write-Blöcke überprüft. Alternativ kann auch vorgesehen sein, dass nur eine klare sequentielle Ausführungsreihenfolge der auf die Datenspeicher-Variable zugreifenden Blöcke und der dazwischenliegenden Blöcke vorliegen muss, also entweder zuerst gelesen oder zuerst geschrieben wird, um die Optimierung zu erlauben. Die Überprüfung der Vorbedingungen bzw. der Zusatzbedingungen wie der klaren sequentiellen Ausführungsreihenfolge stellt sicher, dass durch die erfindungsgemäße Optimierung keine unerwünschten Seiteneffekte auftreten.

Wenn die Zusatzbedingung zunächst nicht erfüllt ist, wird besonders bevorzugt die Abarbeitungsreihenfolge mindestens eines der dazwischenliegenden Blöcke geändert, um die Zusatzbedingung zu erfüllen. Wenn für einen oder mehrere der Blöcke weder durch die Modellierung selbst noch durch technische Umstände eine Abarbeitungsreihenfolge vorgegeben ist, bietet dies Freiheitsgrade zum Umsortieren der Blöcke, so dass eine Erfüllung der Vorbedingungen bzw. Zusatzbedingungen erreicht werden kann.

Besonders bevorzugt wird, sofern ein DataStore-Read-Block und ein DataStore-Write-Block mit Zugriff auf dieselbe Datenspeicher-Variable in dem umfassenden hierarchischen Block gefunden wurden, überprüft, ob der DataStore-Read-Block und der DataStore-Write-Block zumindest teilweise im Signalfluss verbunden sind, so dass der Teil der Datenspeicher-Variablen, welcher im DataStore-Read-Block gelesen wird, eine nichtleere Schnittmenge aufweist mit dem Teil der Datenspeicher-Variablen, welcher im DataStore-Write-Block geschrieben wird, wobei mindestens ein Block im Signalfluss zwischen dem DataStore-Read-Block und dem DataStore-Write-Block liegt, wobei der oder die dazwischen liegenden Blöcke mindestens einen nichtvirtuellen Verarbeitungsblock umfasst, der eine Eingangsvariable verarbeitet, um eine Ausgangsvariable zu erzeugen. In diesem Fall wird für einen Vorgängerblock des DataStore-Write-Blocks, nämlich den dem DataStore-Write-Block im Signalfluss nächstliegenden Verarbeitungsblock, als Zusatzbedingungen überprüft, ob der der Schnittmenge entsprechende Anteil des Blockausgangs des Vorgängerblocks ohne Signalflussabzweigung mit dem DataStore-Write-Block verbunden ist, und ob die Blockausgangsvariable des Vorgängerblocks von Dimension und Datentyp mit der zumindest teilweisen Verbindung im Signalfluss übereinstimmt, wobei wenn diese Zusatzbedingungen erfüllt sind, die Blockausgangsvariable des Vorgängerblocks durch den der Schnittmenge entsprechenden Anteil der Datenspeicher-Variablen ersetzt wird.

Bevorzugt sind Blockdiagramme hierarchisch definiert, wobei ein Block in einer höheren Ebene mehrere Blöcke einer untergeordneten Ebene umfassen kann, wobei Blöcke einer untergeordneten Ebene einem Block einer höheren Ebene zugeordnet sind, und wobei wenn ein erster DataStore-Write-Block auf eine wertgleiche Zuweisung geprüft wird, in einem umfassenden hierarchischen Block, insbesondere atomaren hierarchischen Block, nach weiteren DataStore-Write-Blöcken gesucht wird, die auf dieselbe Datenspeicher-Variable zugreifen, und dass als ein Ausschlussgrund der Ersetzung von Bezügen auf Variablen im Blockpaar des ersten DataStore-Write-Blocks für jeden gefundenen weiteren DataStore-Write-Block überprüft wird, ob dieser auf einen auch von dem ersten DataStore-Write-Block beschriebenen Teil der Datenspeicher-Variablen schreibt, wobei trotz Vorliegens einer wertgleichen Zuweisung kein Ersetzen eines Bezugs auf die Ausgangsvariable des Vorgängerblocks durch einen Bezug auf den von dem ersten DataStore-Write-Block beschriebenen Teil der Datenspeicher-Variablen erfolgt, wenn der Ausschlussgrund vorliegt.

Wenn mehrere DataStore-Write-Blöcke auf denselben Teil einer Datenspeicher-Variablen zugreifen, muss zur Vermeidung unvorhersagbarer Seiteneffekte die Schreibreihenfolge festgelegt und unveränderbar sein, sonst wird auf die Optimierung verzichtet.

Bevorzugt können Variablen als Zustände spezifiziert sein, wobei auch bei Vorliegen einer wertgleichen Zuweisung zwischen einer ersten Variable und einer zweiten Variable eines Blockpaars nur dann ein Ersetzen eines Bezugs auf die erste Variable durch einen Bezug auf die zweite Variable erfolgt, wenn die erste Variable nicht als Zustand spezifiziert ist und/oder die zweite Variable als Zustand spezifiziert ist. Vorzugsweise kann die zweite Variable die Rolle eines Zustands einnehmen, wenn sie eine statische Speicherdauer und einen Initialwert hat; dann kann bei gleichem Initialwert auch eine als Zustand spezifizierte erste Variable durch die zweite Variable ersetzt werden.

Insbesondere umfasst ein Delay-Block eine Zustandsvariable. Da eine Zustandsvariable die Ausgangswerte des folgenden Zeitschritts beeinflusst, darf diese nur durch eine gleiche Zustandsvariable ersetzt werden, um falsches Verhalten zu vermeiden.

Erfindungsgemäß erfolgt trotz Vorliegens einer wertgleichen Zuweisung zwischen einer ersten Variable und einer zweiten Variable eines Blockpaars kein Ersetzen eines Bezugs auf die erste Variable durch einen Bezug auf die zweite Variable, wenn einer oder mehrere der im folgenden genannten Ausschlussgründe vorliegen, wobei im Fall einer nur für Anteile der ersten und der zweiten Variablen bestehenden wertgleiche Zuweisung auch nur diese Anteile bei den Ausschlussgründen betrachtet werden:
- Die erste und die zweite Variable haben eine unterschiedliche Dimension
- Mindestens ein Element der ersten Variable hat einen anderen Datentyp als das korrespondierende Element der zweiten Variable
- Die erste Variable ist als notwendig spezifiziert
- Durch Signalflussabzweigung und/oder Ausführungsreihenfolge der verbundenen Blöcke liegt ein unvorhersagbarer Datenfluss vor

Eine Variable ist insbesondere dann als notwendig spezifiziert, wenn ein Nutzer ihr einen bestimmten Datentyp manuell zugewiesen hat. Durch das erfindungsgemäße Verfahren werden insbesondere automatisch erzeugte Blockvariablen optimiert bzw. eingespart. Wenn die erste Variable und die zweite Variable die gleiche Dimension haben (also nicht eine unterschiedliche), dann belegen sie auch die gleiche Anzahl von Speicherstellen, so dass der Bezug auf diese Variablen vertauscht werden kann (entsprechend gilt dies für Teile von Variablen). Insbesondere kann an einem DataStore-Read-Block DSR und einem verbundenen DataStore-Write-Block DSW ein Umkopieren eines Teilbereich der Elemente der Datenspeicher-Variablen bzw. des DataStore Memory erfolgen, wie etwa eine Zuweisung DSR[0..4] = DSM[3..7] bei der also ein Teilbereich eines Vektors mit der Dimension 5 umkopiert wird.

Besonders bevorzugt sind Blockdiagramme hierarchisch definiert, wobei ein Block in einer höheren Ebene mehrere Blöcke einer untergeordneten Ebene umfassen kann, wobei Blöcke einer untergeordneten Ebene einem Block einer höheren Ebene zugeordnet sind, wobei alle Blöcke auf der Ebene des ersten Blocks und alle diesen Blöcken zugeordneten Blöcke auf das Vorliegen eines Ausschlussgrundes überprüft werden.

Die Erfindung betrifft ferner ein Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Einlesen eines Blockdiagramms,
b. Erzeugen eines Quellcodes mit einem erfindungsgemäßen Verfahren,
c. Kompilieren des Quellcodes für die Recheneinheit, so dass ein ausführbarer Code erzeugt wird,
d. Übertragen des ausführbaren Codes auf das Steuergerät, und
e. Hinterlegen des ausführbaren Codes auf einem nichtflüchtigen Speicher des Steuergeräts und/oder Ausführen des ausführbaren Codes durch die Recheneinheit des Steuergeräts.

Ferner betrifft die Erfindung ein Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein erfindungsgemäßes Verfahren auszuführen.

Weiterhin betrifft die Erfindung ein Computersystem umfassend eine Mensch-Maschine-Schnittstelle, einen nichtflüchtigen Speicher und einen Prozessor, wobei der Prozessor dazu eingerichtet ist, ein erfindungsgemäßes Verfahren auszuführen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: eine bevorzugte Ausführungsform eines Computersystems,
- Figur 2: eine schematische Darstellung der vorzugsweise auf einem Computersystem vorhandenen Softwarekomponenten,
- Figur 3: einen schematischen Ablaufplan einer Ausführungsform des erfindungsgemäßen Verfahrens zum Erzeugen von Quellcode,
- Figur 4: einen Ausschnitt eines Blockdiagramms mit einem dynamischen Assignment,
- Figur 5: einen Ausschnitt eines Blockdiagramms mit einem Read-Modify-Update Mechanismus,
- Figur 6: einen Ausschnitt eines Blockdiagramms mit Read-Update-Use Mechanismus,
- Figur 7: einen Ausschnitt eines Blockdiagramms mit parallelen und rückgeführten Delay-Zuständen,
- Figur 8: einen Ausschnitt eines Blockdiagramms mit einem iterierten System, und
- Figur 9: einen Ausschnitt eines Blockdiagramms mit Switch-Blöcken.

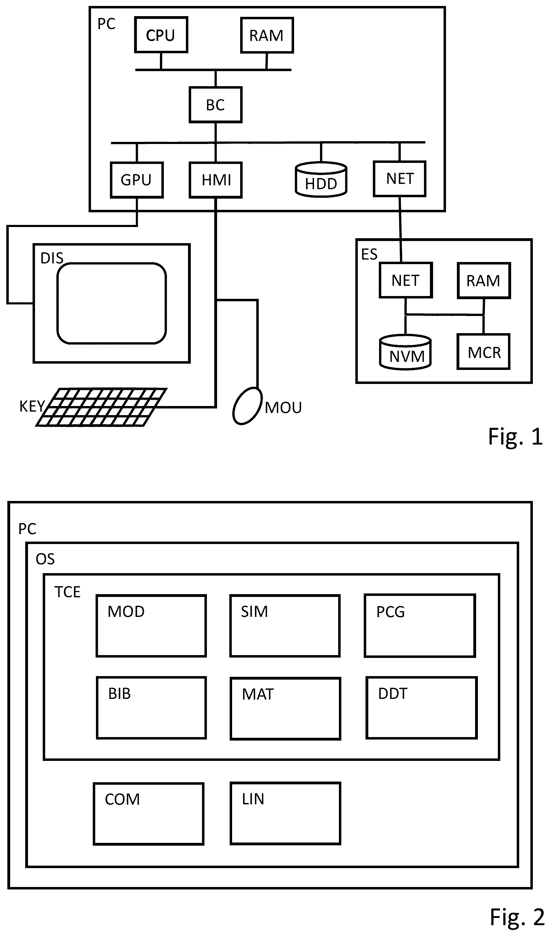

Figur 1 zeigt eine beispielhafte Ausführung eines Computersystems PC. Dieses weist einen Prozessor CPU, der insbesondere als Mehrkernprozessor realisiert sein kann, einen Arbeitsspeicher RAM und einen Buscontroller BC auf. Bevorzugt ist das Computersystem PC dazu ausgelegt, von einem Nutzer direkt manuell bedient zu werden, wobei über eine Grafikkarte GPU ein Monitor DIS und über eine Peripherieschnittstelle HMI eine Tastatur KEY und eine Maus MOU angeschlossen sind. Prinzipiell könnte die Mensch-Maschine-Schnittstelle des Computersystems PC auch als Touch-Interface ausgebildet sein. Das Computersystem umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann als ein Seriensteuergerät oder als Evaluierungsboard für eine Target-Plattform ausgeführt sein. Zweckmäßigerweise umfasst es eine Schnittstelle NET zur Verbindung mit dem Computersystem PC, einen Mikrocontroller MCR mit einer von dem Prozessor des Computersystems abweichenden Architektur, einen Arbeitsspeicher RAM und einen nichtflüchtigen Speicher NVM. Bei Vorhandensein des Steuergeräts ES kann vorzugsweise eine Processor-in-the-Loop Simulation des generierten Codes erfolgen.

In Figur 2 ist ein Schema der vorzugsweise auf dem Computersystem PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner aufzubauen.

Eine Technische Rechenumgebung TCE ermöglicht die Erstellung von Modellen und die Erzeugung von Quellcode aus den Modellen. In einer Modellierumgebung MOD können vorzugsweise über eine graphische Benutzerschnittstelle Modelle eines dynamischen Systems erstellt werden. Hierbei kann es sich insbesondere um Blockdiagramme handeln, welche mehrere Blöcke umfassen und das zeitliche Verhalten und/oder interne Zustände eines dynamischen Systems beschreiben. Zumindest einige der Blöcke sind über Signale verbunden, also gerichtete Verbindungen zum Austausch von Daten, welche skalar oder zusammengesetzt sein können. Blöcke können atomar sein, also aus Sicht der umgebenden Blöcke eine Einheit bilden, bei der zu Beginn eines Rechenschritts alle Eingangssignale anliegen müssen und zu Ende eines Rechenschritts alle Ausgangssignale vorhanden sind. Wenn Blockdiagramme hierarchisch sind, kann eine Vielzahl von Blöcken in einer untergeordneten Ebene den Aufbau eines Blocks in einer übergeordneten Ebene beschreiben. Hierarchische bzw. zusammengesetzte Blöcke, auch wenn diese atomar sind, können eine Vielzahl von Blöcken in einer untergeordneten Ebene umfassen. Zusammengesetzte Blöcke können insbesondere Subsysteme sein; Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke angeordnet sein, um die Eigenschaften des Subsystems weiter zu spezifizieren. Die Rechenumgebung TCE umfasst eine oder mehrere Bibliotheken BIB, aus der Blöcke bzw. Bausteine für den Aufbau eines Modells ausgewählt werden können. In einer Skriptumgebung MAT können Anweisungen interaktiv oder über eine Batchdatei eingegeben werden, um Berechnungen durchzuführen oder das Modell zu modifizieren. Die Rechenumgebung TCE umfasst weiterhin eine Simulationsumgebung SIM, die dazu eingerichtet ist, das Blockdiagramm zu interpretieren bzw. auszuführen, um das zeitliche Verhalten des Systems zu untersuchen. Diese Berechnungen erfolgen vorzugsweise mit Fließkommazahlen hoher Genauigkeit auf einem oder mehreren Kernen des Mikroprozessors CPU des Computersystems.

Aus einem erstellten Modell kann mit Hilfe eines Codegenerators PCG ein Quellcode bevorzugt in einer Programmiersprache wie C erzeugt werden. In einer Definitionsdatensammlung DDT werden zweckmäßigerweise zusätzliche Informationen zu dem Modell, insbesondere zu den Blockvariablen hinterlegt. Zweckmäßigerweise werden den Blockvariablen Wertebereiche und/oder Skalierungen zugeordnet, um eine Berechnung des Modells mit Festkomma-Instruktionen zu unterstützen. Auch gewünschte Eigenschaften des Quellcodes, beispielsweise Konformität zu einem Standard wie MISRA, können in der Definitionsdatensammlung DDT eingestellt bzw. hinterlegt werden. Zweckmäßigerweise wird jede Blockvariable einem vorgegebenen Variablentyp zugeordnet und es werden eine oder mehrere gewünschte Eigenschaften, wie beispielsweise die Zulässigkeit von Optimierungen wie einem Zusammenfassen von Variablen eingestellt. Der Codegenerator PCG wertet vorzugsweise die Einstellungen der Definitionsdatensammlung DDT aus und berücksichtigt diese bei der Erzeugung des Quellcodes. Die Definitionsdatensammlung DDT kann eine Baumstruktur aufweisen bzw. als eine einfache Datei in einem Speicher des Computersystems hinterlegt sein; alternativ kann es vorgesehen sein, die Definitionsdaten in einem dedizierten Datenbanksystem zu hinterlegen. Die Definitionsdatensammlung kann eine Programmschnittstelle und/oder Import-/Export-Funktionen aufweisen.

Das Computersystem PC weist einen Compiler COM und einen Linker LIN auf, die zweckmäßigerweise für die Erzeugung von auf einem Steuergerät ES und/oder dem Computersystem PC ausführbaren Binärdateien eingerichtet sind. Prinzipiell kann eine Vielzahl von Compilern vorhanden sein, insbesondere Cross-Compiler für unterschiedliche Zielplattformen, um Steuergeräte bzw. Evaluationsboards ES mit unterschiedlichen Prozessorarchitekturen zu unterstützen.

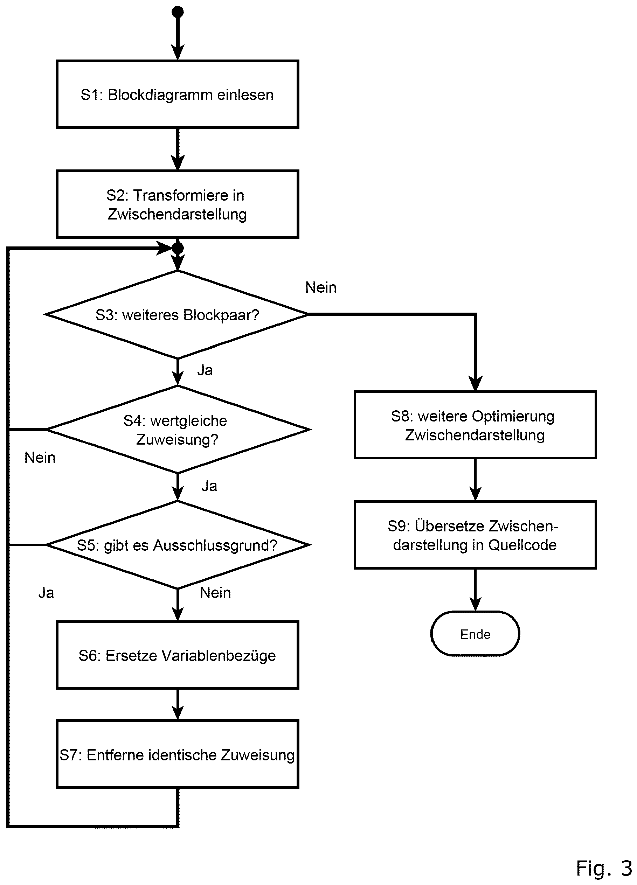

Figur 3 zeigt einen schematischen Ablaufplan einer Ausführungsform des erfindungsgemäßen Verfahrens zum Erzeugen von Quellcode. Das Verfahren kann vollständig von einem Prozessor einer beispielhaften Ausführung des Computersystems PC ausgeführt werden; es kann aber auch zur Ausführung in einer Client-Server-Umgebung mit einem Bedienrechner und einem oder mehreren über ein Netzwerk verbundenen Servern vorgesehen sein, wobei insbesondere rechenintensive Schritte auf den Servern durchgeführt werden.

In Schritt S1 (Blockdiagramm einlesen) wird ein Blockdiagramm eingelesen. Das Blockdiagramm umfasst mindestens zwei durch Signale verbundene Verarbeitungsblöcke und kann eine Vielzahl weiterer Blöcke enthalten. Zweckmäßigerweise umfasst das Einlesen des Blockdiagramms auch ein Auslesen mindestens einer Blockeigenschaft und/oder für die Codeerzeugung relevante Einstellungen, wie beispielsweise der Datentyp einer Variablen, aus der Definitionsdatensammlung DDT.

In Schritt S2 (Transformiere in Zwischendarstellung), wird das gewählte Modell aus einem oder mehreren Blöcken des Blockdiagramms in eine Zwischendarstellung transformiert, die vorzugsweise einen oder mehrere hierarchische Graphen umfasst. Hierbei kann es sich insbesondere um einen Datenflussgraph, einen Kontrollflussgraph oder eine Baumstruktur handeln. Neben dem Blockdiagramm werden zweckmäßigerweise auch Zusatzinformationen aus einer Definitionsdatensammlung DDT bei der Erzeugung der Zwischendarstellung berücksichtigt bzw. fließen in diese ein. Dies kann auch Situationen umfassen, in denen Elemente basierend auf Informationen in der Definitionsdatensammlung DDT erzeugt werden oder Eigenschaften von Elementen bzw. für die Codeerzeugung relevante Einstellungen, wie beispielsweise der Datentyp einer Variablen, aus der Definitionsdatensammlung DDT extrahiert werden.

In Schritt S3 (weiteres Blockpaar?) wird überprüft, ob das Blockdiagramm ein weiteres, bisher nicht betrachtetes Blockpaar umfasst, bei dem potentiell eine erfindungsgemäße Optimierung in Frage kommt. Solange dies der Fall ist, folgt Schritt S4; andernfalls wird die Ausführung in Schritt S8 fortgesetzt.

In Schritt S4 (wertgleiche Zuweisung?) wird für das aktuelle bisher nicht betrachtete Blockpaar überprüft, ob zumindest ein Teil einer Variablen ohne Wertänderung einer anderen Variablen (oder einem Teil dieser Variablen) zugeordnet werden. Wenn dies der Fall ist, folgt Schritt S5; andernfalls wird die Ausführung in Schritt S3 fortgesetzt, um festzustellen, ob noch ein weiteres Blockpaar überprüft werden kann.

Die Erfindung basiert auf der Überlegung, bereits während der Transformation in eine Zwischendarstellung innerhalb von atomaren Subsystemen Blockensembles, insbesondere Blockpaare, und Blockvariablen zu identifizieren, die zu wertgleichen Zuweisungen führen. Indem Blockvariablen überschrieben bzw. Bezüge ersetzt werden, können Zuweisungen zwischen der gleichen Variablen bzw. den gleichen Variablenteilen provoziert werden, die dann bei der Blockcodeerstellung erst gar nicht angelegt werden müssen, oder Zuweisungen des gleichen Wertes auf die gleiche Variable - in der Regel Zustandsvariable - vorgenommen werden, so dass zumindest eine der Variablen entfällt.

Weil die Optimierung während der Transformation in eine Zwischendarstellung erfolgt, sind noch sämtliche Informationen des Blockdiagramms verfügbar. Dadurch wird es insbesondere möglich, das Ergebnis von Blockdiagramm-Transformationen zu berücksichtigen und/oder eine für die Optimierung geeignete Ausführungsreihenfolge der Blöcke zu wählen bzw. zu erzwingen, sofern die entsprechenden Freiheitsgrade vorhanden sind. Weiterhin ist die Wahl einer geeigneten Reihenfolge möglich, um die entsprechenden Ersetzungen mehrfach oder maximal nutzbringend durchführen zu können.

In einer Ausführungsform der Erfindung können Ausgänge von Blöcken, die als atomare Einheit betrachtet werden können, insbesondere also atomare Systeme, bei Vorliegen einer geeigneten Modellierung durch die Ausgänge und/oder Zustände nachfolgender Blöcke ersetzt werden. Zweckmäßigerweise findet diese Ersetzung statt, bevor das Innere des atomaren Systems betrachtet wird; bei der Prüfung auf Ausschlussgründe werden vorzugsweise Initialwert, Initialisierungsverhalten und State-Reset-Verhalten berücksichtigt.

In Schritt S5 (gibt es Ausschlussgrund?) erfolgt eine Prüfung darauf, ob ein Ausschlussgrund vorliegt, der eine erfindungsgemäße Optimierung unmöglich macht. Sollte dies der Fall sein, wird die Ausführung in Schritt S3 fortgesetzt. Mögliche Ausschlussgründe für eine Optimierung umfassen insbesondere:
- Die beteiligten Variablen weichen in Dimensionsbreiten, Datentyp und/oder Skalierung voneinander ab.
- Das Blockdiagramm umfasst Signallinienabzweige, durch die die Eliminierung einer Variablen zum Verlust eines notwendigen Puffers oder Zustands führt.
- Es liegt ein unbekannter Datenfluss vor, beispielsweise durch
   ∘ eine Freigabe von Variablen-Merging
   ∘ einen Aufruf externer Funktionen
   ∘ weitere DataStore-Write-Blöcke und/oder DataStore-Read-Blöcke ohne klare Datenflussbeziehung zu den aktuell betrachteten Blöcken
- Die zu eliminierende Variable ist so spezifiziert, dass sie im initialen Codemuster erscheinen muss.

Wenn keine Ausschlussgründe vorliegen, wird die Ausführung in Schritt S6 (Ersetze Variablenbezüge) fortgesetzt, wobei also ein Bezug auf eine Variable einer wertgleichen Zuweisung durch einen Bezug die Variable des entsprechenden Nachbar-Blocks ersetzt wird. Anschließend wird in Schritt S7 (Entferne identische Zuweisung) eine eventuell durch den Austausch des Variablenbezugs provozierte identische Zuweisung aus der Zwischendarstellung entfernt. Die Ausführung wird dann in Schritt S3 fortgesetzt, um eventuell vorhandene weitere Blockpaare zu bearbeiten.

In Schritt S8 (weitere Optimierung Zwischendarstellung) werden die hierarchischen Graphen optimiert, um die Anzahl benötigter Variablen und/oder einen Speicherverbrauch, wie beispielsweise eine Stackbelegung, und/oder die Anzahl von Operationen bzw. Prozessorinstruktionen und/oder die Ausführungszeit des Quellcodes zu verringern. Diese Optimierung kann eine Vielzahl von Zwischenschritten umfassen, in denen weitere Zwischendarstellungen zwischen Modell/Blockdiagramm und Quellcode/Programmtext erzeugt werden. Insbesondere kann es vorgesehen sein, in jedem Zwischenschritt eine Menge von ursprünglichen hierarchischen Graphen in eine andere Menge von geänderten hierarchischen Graphen zu konvertieren, wobei eine oder mehrere Optimierungsregeln angewandt werden. Verschiedene Strategien wie "Constant folding" oder eine Eliminierung von "Dead Code" können während der Optimierung angewandt werden. Prinzipiell ist es möglich, dass mehrere in Rahmen der Transformation erzeugte Variablen in Schritt S zusammengefasst werden. Gemäß der Erfindung werden aber vorzugsweise bereits während der Transformation in eine Zwischendarstellung mehrere Variablen des Blockdiagramms derart zusammengefasst, dass schon die erste Zwischendarstellung nur noch eine Variable enthält.

In Schritt S9 (Übersetze Zwischendarstellung in Quellcode) werden die optimierte Zwischendarstellung bzw. die optimierten hierarchischen Graphen, welche aus den gesamten durchgeführten Zwischenschritten resultieren, in Quellcode einer textuellen Programmiersprache, wie insbesondere C-Code, übersetzt. Auch in diesem Schritt kann eine weitere Optimierung erfolgen, insbesondere dergestalt, dass die erzeugten Anweisungen einer Untermenge der prinzipiell von der Sprache umfassten Anweisungen darstellen und/oder die erzeugten Kontrollstrukturen eine Untermenge der prinzipiell von der Sprache umfassten Kontrollstrukturen darstellen. Dies ermöglicht es, genau definierte Regeln zu erfüllen. Alternativ oder ergänzend kann es vorgesehen sein, Zusatzinformationen, wie z.B. einen Bezug zwischen Programmzeile und Block des Blockdiagramms, zu erzeugen und insbesondere in Form von Kommentaren in den Quellcode einzubinden, um die Lesbarkeit des Quellcodes zu verbessern und/oder ein Debugging zu vereinfachen.

Während oder nach der Codegenerierung können Informationen über das aktuelle Blockdiagramm oder Ergebnisse der Codegenerierung, wie beispielsweise Warnungen, in der Definitionsdatensammlung gespeichert werden. Diese Informationen können beispielsweise dazu genutzt werden, eine Kompilierung des erzeugten Quellcodes zu beeinflussen oder Metainformationen für andere Werkzeuge bereitzustellen, wie beispielsweise Kalibrierungsinformationen im ASAP2-Format oder Informationen zur Erzeugung einer Zwischenschicht nach dem AUTOSAR-Standard. In alternativen Ausführungsformen der Erfindung kann es vorgesehen sein, aus dem Blockdiagramm Code in einer Hardwarebeschreibungssprache oder eine Konfiguration eines programmierbaren Hardwarebausteins zu generieren.

Beispielhafte Ausführungsformen der Erfindung werden im Folgenden anhand einiger Ausschnitte von Blockdiagrammen erläutert.

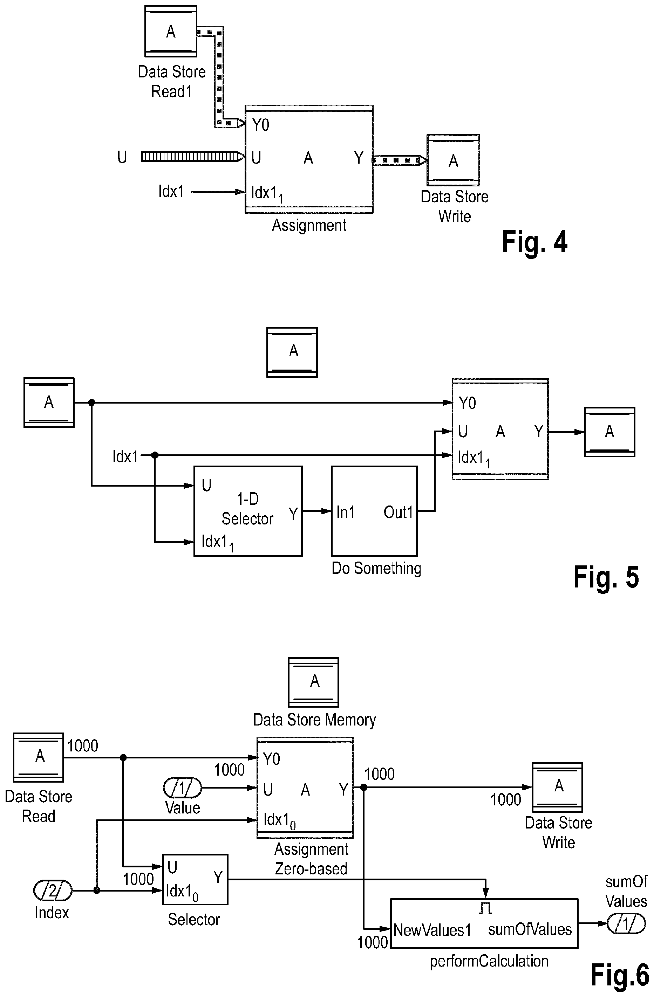

Figur 4 zeigt einen Ausschnitt eines Blockdiagramms mit einer dynamischen Zuweisung bzw. einem Assignment. Der Ausschnitt umfasst einen DataStore-Read-Block, der aus einem Datenspeicher A liest, einen Assignment-Block, und einem DataStore-Write-Block, der in den Datenspeicher A schreibt. Der Assignment-Block empfängt als Eingangssignale den aus dem Datenspeicher A gelesenen vektoriellen Wert, einen Index Idx1 und einen skalaren Ersatzwert U. Nachdem der bisherige Wert von A an der Stelle Idx1 durch den Ersatzwert U ersetzt wurde, gibt der Assignment-Block das resultierende Signal an den DataStore-Write-Block aus.

Für diesen Ausschnitt würde in einer direkten Implementierung ohne **Optimierung folgender Code erzeugt:**

```
     for (Aux_S32 = 0; Aux_S32 < 20; Aux_S32++) {
           Sa1_Data_Store_Read1[Aux_S32] = A[Aux_S32];
     }
     for (Aux_S32 = 0; Aux_S32 < 20; Aux_S32++) {
           Sa1_Assignment [Aux_S32] = Sal_Data_Store_Read1 [Aux_S32];
     }
     Sa1_Assignment [Idx1] = U;
     for (Aux_S32 = 0; Aux_S32 < 20; Aux_S32++) {
           A[Aux_S32] = Sa1_Assignment [Aux_S32];
     }
```

Eine bestmögliche Optimierung würde zu folgendem Code führen:
A [Idx1] = U;

Gegenüber dem nicht optimierten Code ist also eine Eliminierung von den Puffervariablen Sa1_Assignment und Sa1_Data_Store_Read1 erfolgt.

In einem erfindungsgemäßen Verfahren werden folgende

Ausgangsbedingungen identifiziert:
- Wertgleiche Zuweisung im Blockcodemuster des DataStore-Read-Blocks
- Wertgleiche Zuweisung am Eingang des Assignment-Blocks
- Wertgleiche Zuweisung im Blockcodemuster des DataStore-Write-Blocks
- Keine Mehrfachmodifikation der Data Store-Variable
- Keine Lese-/Schreib-Reihenfolgenkonflikte zwischen DataStore-Read- und/oder -Write-Blöcken

Damit kann am Ausgang des DataStore-Read-Blocks Sa1_Data_Store_Read1 durch das _{A}' des DataStore-Memorys ersetzt werden; hier und im Folgenden wird durch an einen Bezeichner angehängte Striche angedeutet, ob dieser sich auf den linken bzw. im Signalfluss stromaufwärts gelegenen Block bezieht - dann mit einem Strich gekennzeichnet - oder auf den rechten bzw. im Signalfluss stromabwärts gelegenen Block bezieht - dann mit zwei Strichen gekennzeichnet. Weiterhin kann am Ausgang des Assignment-Blocks Sa1_Assignment durch das _{A}" des nachfolgende Data Store Write-Blocks ersetzt werden.

**Somit erhält man**

```
     for (Aux_S32 = 0; Aux_S32 < 20; Aux_S32++) {
           A' [Aux_S32] = A[Aux_S32];
     }
     for (Aux_S32 = 0; Aux_S32 < 20; Aux_S32++) {
           A" [Aux_S32] =A' [Aux_S32];
     }
     A" [Idx1] = U;
     for (Aux_S32 = 0; Aux_S32 < 20; Aux_S32++) {
           A[Aux_S32] = A'' [Aux_S32];
     }
```

als möglichen initialen Code (der besseren Lesbarkeit wegen erfolgt die Erläuterung anhand von C-Quellcode, auch wenn die Optimierung eigentlich vor der Übersetzung in Quellcode erfolgt). Die Striche dienen hier und auch im Folgenden nur der Verdeutlichung des Bezugs zu einem der Blöcke und ändern nichts daran, dass es sich jeweils um den gleichen Bezeichner handelt.

Erfindungsgemäß umfasst das Transformieren des Blockdiagramms in die Zwischendarstellung ein Entfernen solcher Zuweisungen, bei denen auf beiden Seiten ein Bezug auf dieselbe Variable steht (wie oben angedeutet liegt keiner der Ausschlussgründe vor).

Somit werden die drei "A[Aux_S32] = A[Aux_S32]"-Zuweisungen samt umgebender Schleifen erst gar nicht angelegt, d.h. es ergibt sich sofort:
**A"** [Idx1] = U;

Mithin bietet das erfindungsgemäße Verfahren folgenden Vorteil: Unnötige Statements und Variablen werden erst gar nicht erzeugt, wodurch sofort effizienter Code entsteht und offensichtlich unnötige Variablen und Statements die weiteren Optimierungsschritte bzw. die Codeerzeugung gar nicht weiter durchlaufen müssen.

In dem in Figur 4 gezeigten Ausschnitt eines Blockdiagramms ist ein Lesen aus einer Datenspeicher-Variablen, ein Ändern des Werts eines Teils der Variablen, und ein Schreiben zumindest des geänderten Teils der Variablen in denselben Datenspeicher modelliert. Aber auch wenn der Wert der Variablen in eine andere Datenspeicher-Variable geschrieben wird, kann mit dem erfindungsgemäßen Verfahren effizienter Quellcode erzeugt werden.

Wäre also die DataStore-Variable des Data Store-Write-Blocks eine andere, etwa B, dann würde anstelle von A" jeweils B" im initialen Code stehen. Hierbei deuten die zwei Striche an, dass sich der Bezeichner auf den rechten Block bezieht. Ohne Optimierung erhält man initial folgenden Code:

```
     for (Aux_S32 = 0; Aux_S32 < 20; Aux_S32++) {
           A' [Aux_S32] = A[Aux_S32];
     }
     for (Aux_S32 = 0; Aux_S32 < 20; Aux_S32++) {
           B" [Aux_S32] = A' [Aux_S32];
     }
     B" [Idx1] = U;
     for (Aux_S32 = 0; Aux_S32 < 20; Aux_S32++) {
           B [Aux_S32] = B" [Aux_S32];
     }
```

Durch das erfindungsgemäße Entfernen solcher Zuweisungen, bei denen auf beiden Seiten ein Bezug auf dieselbe Variable steht, also unter Auslassung der unnötigen identischen Umkopieraktionen erhält man folgenden Code:

```
     for (Aux_S32 = 0; Aux_S32 < 20; Aux_S32++) {
           B" [Aux_S32] = A' [Aux_S32];
     }
     B" [Idx1] = U;
```

Ohne weitere Informationen ist dies das bestmögliche Codemuster. Vorteilhafterweise muss bei dem erfindungsgemäßen Verfahren zur Erzeugung von Quellcode keine gemeinsame Analyse von sämtlichen drei Blöcken erfolgen, sondern eine Betrachtung von Blockpaaren reicht aus. Vorliegend werden also folgende zwei Teile betrachtet:
1. Hat der Data Store Read-Blockausgang nachfolgend keinen Signallinienabzweig bzw. eine klare datenflussgetriebene Reihenfolge gegenüber etwaigen Data Store Write-Blöcken für alle Nachfolger? Dann kann die dedizierte Blockausgangsvariable durch den für die dynamische Zuweisung selektierten Teil der Data Store Memory-Variable ersetzt werden.
2. Hat die Blockausgangsvariable des Vorgängerblocks des DataStore-Write-Eingangs die gleichen Eigenschaften wie der selektierte Teil der DataStore Memory-Variable und gibt es keine Signallinienabzweige? Dann kann die Blockausgangsvariable des Vorgängerblocks durch den selektierten Teil der DataStore-Memory-Variable ersetzt werden.

Figur 5 zeigt einen Ausschnitt eines Blockdiagramms mit einem Read-Modify-Update Mechanismus. Der Ausschnitt umfasst einen DataStore-Read-Block, der aus einem Datenspeicher A liest, einen Selector-Block, einen Berechnungs-Block, einen Assignment-Block, und einem DataStore-Write-Block, der in den Datenspeicher A schreibt. Der Selector-Block empfängt als Eingangssignale den aus dem Datenspeicher A gelesenen vektoriellen Wert und einen Index Idx, und liefert als Ausgang den Wert des an der Stelle Idx1 befindlichen Elements des Eingangsvektors an den nachfolgenden Berechnungs-Block. Der Berechnungs-Block DoSomething ist als hierarchischer Block gestaltet und kann beliebige Operationen anwenden, bevor das Resultat als skalarer Ersatzwert an den Assignment-Block ausgegeben wird. Neben dem skalaren Ersatzwert U empfängt der Assignment-Block den aus dem Datenspeicher A gelesenen vektoriellen Wert und den Index Idx1 als Eingangssignale. Nachdem der bisherige Wert von A an der Stelle Idx1 durch den Ersatzwert U ersetzt wurde, gibt der Assignment-Block das resultierende Signal an den DataStore-Write-Block aus.

Hier ist der wesentliche Punkt gegenüber dem vorigen Beispiel der Abzweig auf den Selector-Block. Die Data Store Read-Blockausgangsvariable puffert den Data Store Memory-Wert zum Zeitpunkt des Lesens. Wird der Code des Selector-Blocks bzw. im Fall von statischer Selektion eines Nachfolgers des Selector-Blocks potenziell nach dem Data Store Write bzw. seinem Vorgänger-Block ausgeführt, dann kann der Data Store Read-Blockausgang nicht eliminiert werden. Ist "DoSomething" eine Kette von Blöcken, die auch den U-Eingang des Assignment-Blocks treiben oder ist "DoSomething" ein atomares System, dann ist die richtige Ausführungsreihenfolge der Blöcke garantiert, und ein Ersetzen der Blockvariablen ist möglich. Damit ergibt sich folgender **Quellcode:**

```
     for (Aux_S32 = 0; Aux_S32 < 20; Aux_S32++) {
           A' [Aux_S32] = A[Aux_S32];
     }
     Sa1_Selector = A' [Idx1]; /* Ausgangsvariable des Selector-Blocks */
     ... /* Do Something berechnet U und liest Sa1_Selector */
     for (Aux_S32 = 0; Aux_S32 < 20; Aux_S32++) {
           A" [Aux_S32] = A' [Aux_S32];
     }
     A" [Idx1] = U;
     for (Aux_S32 = 0; Aux_S32 < 20; Aux_S32++) {
           A[Aux_S32] = A' [Aux_S32];
     }
```

**Nach dem Entfernen überflüssiger Zuweisungen erhält man somit:**

```
     Sa1_Selector = A' [Idx1]; /* Ausgangsvariable des Selector-Blocks */
     ... /* Do Something berechnet U und liest Sa1_Selector */
     A" [Idx1] = U;
```

Durch ein Überprüfen und ggfs. Anpassen der Blockausführungsreihenfolge kann also auch bei einem Abzweig im Signalfluss optimierter Quellcode erzeugt werden.

Figur 6 zeigt einen Ausschnitt eines Blockdiagramms mit Read-Update-Use Mechanismus, welcher das Lesen einer Datenspeicher-Variablen, Ändern des Werts und Zurückschreiben eines Teils der Variablen mit einer Berechnung basierend auf der geänderten Variablen kombiniert. Der Ausschnitt umfasst einen DataStore-Read-Block, der aus einem DataStore-Memory A liest, einen Assignment-Block, und einem DataStore-Write-Block, der in den Datenspeicher A schreibt. Neben dem skalaren Ersatzwert U empfängt der Assignment-Block den aus dem Datenspeicher A gelesenen vektoriellen Wert und den Index Idx1 als Eingangssignale. Nachdem der bisherige Wert von A an der Stelle Idx1 durch den Ersatzwert U ersetzt wurde, gibt der Assignment-Block das resultierende Signal an den DataStore-Write-Block und einen Berechnungs-Block performCalculation aus. Das Ausgangssignal des DataStore-Read-Blocks ist zusätzlich mit einem Selector-Block verbunden, der als Eingangssignale den aus dem Datenspeicher A gelesenen vektoriellen Wert und einen Index Idx1 empfängt, und als Ausgangssignal den Wert des an der Stelle Idx1 befindlichen Elements des Eingangsvektors ausgibt. Dieses Ausgangssignal ist mit dem Trigger-Eingang des Berechnungs-Blocks performCalculation verbunden, welcher beliebige Operationen auf den aktualisierten Wert der Datenspeicher-Variablen anwenden kann, bevor das Resultat an einen Ausgangsport sumofValues ausgegeben wird.

Hier ist der entscheidende Unterschied zur vorherigen Situation, dass nicht sichergestellt ist, dass der Selector-Block vor dem DataStore-Write-Block ausgeführt wird. Nach dem Stand der Technik wird bei der Codegenerierung typischerweise folgender Code erzeugt:

```
     for (Aux_S32 = 0; Aux_S32 < 20; Aux_S32++) {
           Sa1_Data_Store_Read[Aux_S32] = A[Aux_S32];
     }
     for (Aux_S32 = 0; Aux_S32 < 20; Aux_S32++) {
           Sa1_Assignment [Aux_S32] = Sa1_Data_Store_Read [Aux_S32];
     }
     Sa1_Assignment [index] = value;
     for (Aux_S32 = 0; Aux_S32 < 20; Aux_S32++) {
           A[Aux_S32] = Sa1_Assignment [Aux_S32];
     }
     Sa1_Selector = Sa1_Data_Store_Read1 [index];
     if (Sa1_Selector) {
           sumOfValues = performCalculation (Sa1_Assignment);
     }
```

Dies führt dazu, dass eine Optimierung auf der Zwischendarstellung nichts mehr ausrichten kann und die Blockausgangsvariable Sa1_Data_Store_Read unnötigerweise übrigbleibt.

Eine Erzeugung von optimiertem Code für das Blockpaar aus DataStore-Read-Block und Selector-Block kann dann erfolgen, wenn die Berechnungsreihenfolge der Blöcke sichergestellt ist, der Selector-Block also immer vor dem DataStore-Write-Block ausgeführt. Gemäß einer bevorzugten Ausführungsform der Erfindung überprüft der Produktionscodegenerator hier zweckmäßigerweise, ob die Ausführung von Assigment-Block und Selector-Block frei gegeneinander verschoben werden kann, und stellt in diesem Fall eine virtuelle Datenflussabhängigkeit zwischen Selector-Block und Assignment-Block (als Vorgänger-Block des DataStore-Write-Blocks) fest. Dies erzwingt eine geeignete Ausführungsreihenfolge der Blöcke bzw. stellt eine rechtzeitige Ausführung des Selector-Blocks sicher.

Weiterhin kann eine Optimierung des Blockpaars aus Assignment-Block und DataStore-Write-Blocks nur dann erfolgen, wenn kein DataStore-Read-Block oder - im Fall der Eliminierung der DataStore-Read-Ausgangsvariable ein DataStore-Read-Nachfolgeblock - nach dem Assignment-Block ausgeführt werden. Nur dann darf der Assignment-Block als Vorgänger des DataStore-Write-Blocks die DataStoreMemory-Variable als Ausgangsvariable erhalten bzw. kann die Ausgangsvariable des Assignment-Blocks entfernt werden.

Signallinienabzweige erfordern es somit, dass mehr als zwei Blöcke überprüft werden, um die Zulässigkeit der erfindungsgemäßen Optimierung sicherzustellen. Dies gilt auch bei einem Zugriff mehrerer DataStore-Read- und -write-Blöcke auf denselben DataStore-Memory-Block.

Wenn die erforderliche Ausführungsreihenfolge der im Signalfluss verbundenen Blöcke eingehalten wird, ergibt sich folgender Code:

```
     for (Aux_S32 = 0; Aux_S32 < 20; Aux_S32++) {
           A' [Aux_S32] = A[Aux_S32];
     }
     Sa1_Selector = A' [index];
     for (Aux_S32 = 0; Aux_S32 < 20; Aux_S32++) {
           A" [Aux_S32] = A' [Aux_S32];
     }
     A" [index] = value;
     for (Aux_S32 = 0; Aux_S32 < 20; Aux_S32++) {
           A[Aux_S32] = A" [Aux_S32];
     }
     if (Sa1_Selector) {
           sumOfValues = performCalculation(A'');
     }
```

Nach dem Entfernen überflüssiger Zuweisungen einer Variablen auf sich selbst erhält man:

```
     Sa1_Selector = A' [index];
     A" [index] = value;
     if (Sa1_Selector) {
           sumOfValues = performCalculation (A");
     }
```

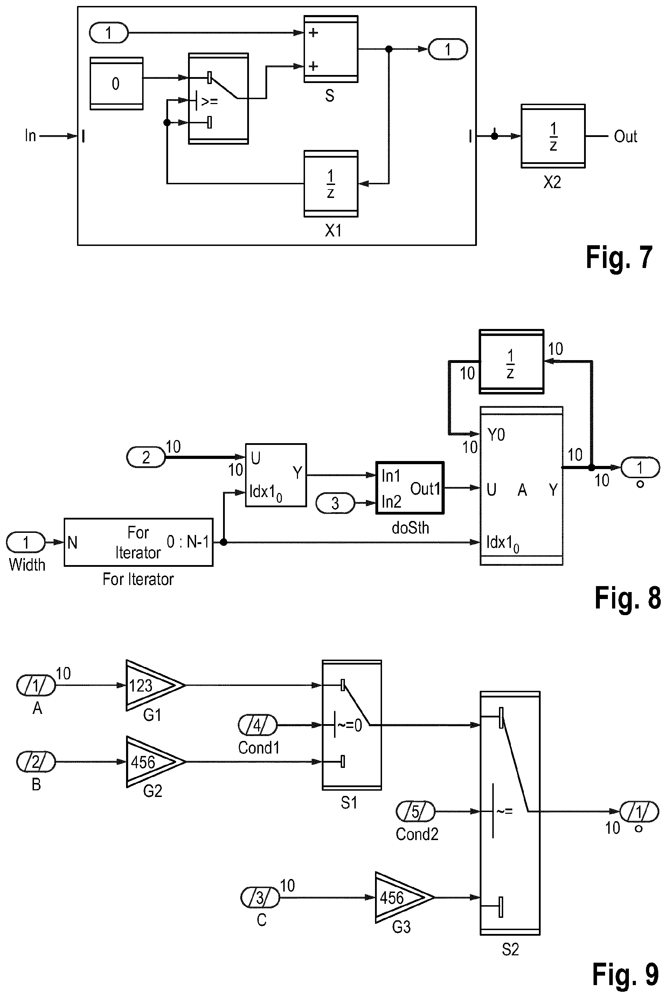

Figur 7 zeigt einen Ausschnitt eines Blockdiagramms mit parallelen und rückgeführten Zuständen von Delay-Blöcken, die ein Signal um einen Zeitschritt verzögern. Ein Subsystem empfängt ein Eingangssignal In. Das Eingangssignal trifft auf einen Summations-Block S, dessen Ausgang sowohl mit einem Ausgangsport als auch einem ersten Delay-Block mit dem Zustand X1 verbunden ist. Der Ausgang des Delay-Blocks ist mit einem ersten Eingang eines Selektor-Blocks verbunden, welcher außerdem eine Konstante empfängt und alternativ ausgeben kann. Der Ausgang des Selektor-Blocks bildet einen zweiten Eingang des Summations-Blocks S. Das Ausgangssignal Out des Subsystems ist mit einem zweiten Unit-Delay-Block verbunden, der einen Zustand X2 besitzt. Eine solche Modellierung mit gleichartigen Delay-Blöcken tritt beispielsweise bei der Verwendung von Bibliotheksblöcken einer Block Library auf.

Sofern nicht atomare Systemgrenzen andere Update-Reihenfolgen der beiden Zustände erzwingen oder andere Initialwerte spezifiziert sind, können X1 und X2 die gleiche Zustandsvariable bekommen:

```
     ... /* Use X1 */
     S = ...;
     ... /* Use X2 */
     ... /* Use S */
     X1 = S;
     ...
     X2 = S;
```

Damit ergibt sich folgender Code, wobei die unnötige Doppeldefinition von der Optimierung später entfernt wird:

```
     ... /* Use X1 */
     S = ...;
     ... /* Use X1 */
     ... /* Use S */
     ...
     X1 = S;
```

Liegen keine auf diese Weise optimierbaren parallelen Zustände vor, dann ist es für rückgeführte Delays möglich, die vorhergehende Blockausgangsvariable zu ersetzen. Ist das dargestellte Subsystem also atomar, erhält man mit Sa2_Out1 als Blockausgangsvariable des Subsystems:

```
     ... /* Use X1 */
     S = ...;
     Sa2_Out1 = S;
     X1 = S;
     ... /* Use X2 */
     ... /* Use Sa2_Out1 */
     ...
     X2 = Sa2_Out1;
```

Bei einer erfindungsgemäßen Optimierung wertgleicher Zuweisungen ergibt sich folgender Code:

```
     ... /* Use X1 */
     X1 = ...;
     Sa2_Out1 = X1;
     ... /* Use X2 */
     ... /* Use Sa2_Out1 */
     ...
     X2 = Sa2_Out1;
```

Handelt es sich bei dem atomaren System um ein bedingt ausgeführtes Subsystem, dann erhalten die Ausgänge Initialwerte und können bei statischer Speicherdauer die Rolle eines Zustands im generierten Seriencode annehmen. Hat so ein Zustand den gleichen Initialwert wie X1, dann ist er ein paralleler Zustand, ähnlich wie X2 im Fall ohne bedingte Ausführung. Also kann hier auch der Zustand durch den Ausgang des atomaren Systems ersetzt werden, sofern die Initialwerte gleich sind:

```
     ... /* Use Sa2_Out1 */
     Sa2_Out1 = ...;
     ... /* Use X2 */
     ... /* Use Sa2_Out1 */
     ...
     X2 = Sa2_Out1;
```

Hierbei ist es, sofern es sich nicht um ein bedingt ausgeführtes System handelt bzw. vom Anwender eine Spezifikation für den Systemausgang vorgegeben ist und sofern der Unit Delay State ausreichende Sichtbarkeit hat, vorteilhafter, die Reihenfolge zu tauschen, d.h. zunächst den Blockausgang durch den Systemausgang (egal ob und wie initialisiert) zu ersetzen, um die Bedingung gleicher Initialisierung zu umgehen:

```
... /* Use X1 */
     X1 = ...;
     ... /* Use X2 */
     ... /* Use X1 */
     ...
     X2 = X1;
```

Figur 8 zeigt einen Ausschnitt eines Blockdiagramms mit einem iterierten System. In iterierten Systemen ergeben sich für nichtskalare Signale unter Umständen innere Schleifen, die besonders beim Aufbau eines Vektors bzw. einer Matrix über einen Assignment-Block die Performance negativ beeinflussen. Dargestellt ist die Verarbeitung von vektoriellen Signalen. Ein For-Iterator-Block empfängt über einen ersten Eingangsport ein Signal Width, welches die Anzahl von Iterationen vorgibt, also wie häufig der For-Iterator-Block verbundene Blöcke während eines Zeitschritts ausführen lässt. Der Ausgang des For-Iterator-Blocks ist mit einem Index-Eingang Idx1 eines Selector-Blocks und eines Assignment-Blocks A verbunden. Der Selector-Block wählt ein Element eines an einem zweiten Eingangsport empfangenen vektoriellen Eingangssignals aus und gibt dieses an einem Verarbeitungs-Block doSth weiter, der zusätzlich mit einem dritten Eingangsport verbunden ist. Das Ausgangssignal Out1 des Verarbeitungsblocks doSth wird dem Assignment-Block A als neuer Wert U zugeführt. Der Ausgang des Assignment-Blocks wird zum einen über einen Delay-Block als zu ändernder Vektor Y0 zurückgeführt und zum anderen über einen Ausgangsport O ausgegeben.

Eine Codegenerierung für den gezeigten Blockdiagramm-Ausschnitt mit dem rückgeführten Delay-Block ergibt:

```
     Sa2_Assignment_FirstRun = 1;
     for (iterator = 0; iterator <= 9; iterator++) {
          Sa2_Selector = in2[iterator];
          U = doSth(Sa2_Selector, in3);
          if (Sa2_Assignment_FirstRun) {
               for (Aux_S32 = 0; Aux_S32 < 10; Aux_S32++) {
                    Sa2_Assignment [Aux_S32] = X_Sa2_UnitDelay[Aux_S32];
               }
               Sa2_Assignment_FirstRun = 0;
          }
          Sa2_Assignment [iterator] = U;
          for (Aux_S32 = 0; Aux_S32 < 10; Aux_S32++) {
               X_Sa2_UnitDelay [Aux_S32] = Sa2_Assignment [Aux_S32];
     }
```

Mit der Optimierung ergibt sich folgender Code, wobei hier - wie auch sonst - später entfernter überflüssiger Code durchgestrichen dargestellt wird:

```
     Sa2_Assignment_FirstRun = 1;
     for (iterator = 0; iterator <= 9; iterator++) {
          Sa2_Selector = in2 [iterator];
          U = doSth(Sa2_Selector, in3);
          if (Sa2_Assignment_FirstRun) {
               Sa2_Assignment_FirstRun = 0;
          }
          X_Sa2_UnitDelay [iterator] = U;
     }
```

Durch die erfindungsgemäße Optimierung entfallen hier also die für die üblichen Verfahren schwerer zu optimierenden inneren Schleifen.

Figur 9 zeigt einen Ausschnitt eines Blockdiagramms mit der Verwendung von Switch-Blöcken. Über einen ersten Eingangsport A wird ein vektorielles Eingangssignal empfangen und einem Gain-Block G1 zugeführt, der die Werte mit einem Faktor 123 multipliziert. Über einen zweiten Eingangsport B wird ein skalares Signal empfangen und einem Gain-Block G2 zugeführt, der den Wert mit einem Faktor 456 multipliziert. Die Ausgangssignale der beiden Gain-Blöcke sind mit einem Switch-Block S1 zugeführt, der gemäß einem Wert am Eingangsports Cond1 wählt, welches Signal weitergegeben wird. Der Ausgang von Switch-Block S1 ist mit dem ersten Eingang eines zweiten Switch-Blocks S2 verbunden. Über einen Eingangsport C wird ein weiteres vektorielles Eingangssignal empfangen und einem dritten Gain-Block G 3 zugeführt, der die Werte mit einem Faktor 456 multipliziert und an den zweiten Eingang von Switch-Block S2 ausgibt. Anhand eines weiteren Eingangsports Cond2 schaltet der zweite Switch-Block S2 zwischen dem Ausgang des ersten Switch-Blocks S1 und dem Ausgang des dritten Gain-Blocks G3 um. Das durchgeschaltete Signal wird über Ausgangsport O ausgegeben.

Wenn der Produktionscodegenerator Blockdiagramm-basiert Vorgängerblöcke von Switch-Blöcken oder Multiport-Switch-Blöcken in den Kontrollflusszweig eines Dateneingangs verschiebt, werden die Blockausgänge der unmittelbaren Vorgänger jeweils direkt auf die Blockausgangsvariable des Switch- oder Multiport-Switch-Blocks umkopiert. In diesem Fall können sie durch den Switch-Ausgang ersetzt werden.

```
     if (Cond2) {
           if (Cond1) {
                 for (Aux_S32 = 0; Aux_S32 < 10; Aux_S32++) {
                        G1 [Aux_S32] = 123 * A[Aux_S32];
                  }
                 for (Aux_S32 = 0; Aux_S32 < 10; Aux_S32++) {
                        S1 [Aux_S32] = G1 [Aux_S32];
                  }
           } else {
                 G2 = 456 * B;
                 for (Aux_S32 = 0; Aux_S32 < 10; Aux_S32++) {
                        S1 [Aux_S32] = G2;
                  }
           }
           for (Aux_S32 = 0; Aux_S32 < 10; Aux_S32++) {
                 S2[Aux_S32] = S1 [Aux_S32];
           }
     } else {
           for (Aux_S32 = 0; Aux_S32 < 10; Aux_S32++) {
                 G3[Aux_S32] = 456 * C[Aux_S32];
           }
           for (Aux_S32 = 0; Aux_S32 < 10; Aux_S32++) {
                 S2[Aux_S32] = G3[Aux_S32];
           }
     }
     for (Aux_S32 = 0; Aux_S32 < 10; Aux_S32++) {
           O [Aux_S32] = S2[Aux_S32];
     }
     
```

Hier ergibt sich dann bei Anwendung auf S2 und S1 sowie vorheriger Rückkopie des Ausgangs O

```
     if (Cond2) {
           if (Cond1) {
                 for (Aux_S32 = 0; Aux_S32 < 10; Aux_S32++) {
                       O'[Aux_S32] = 123 * A[Aux_S32];
                  }
           } else {
                 G2 = 456 * B;
                 for (Aux_S32 = 0; Aux_S32 < 10; Aux_S32++) {
                       O" [Aux_S32] = G2;
                  }
           }
     } else {
           for (Aux_S32 = 0; Aux_S32 < 10; Aux_S32++) {
                 Oʺʺ [Aux_S32] = 456 * C[Aux_S32];
           }
     }
```

Hierbei bezeichnet O' einen ersetzten Bezug aus dem Blockpaar mit G1, O" einen ersetzten Bezug aus dem Blockpaar mit S1, O‴ einen ersetzten Bezug aus dem Blockpaar mit S2 und Oʺʺ einen ersetzten Bezug aus dem Blockpaar mit G3. Weil ein Ausschlusskriterium vorliegt, nämlich die Signale unterschiedliche Breiten haben, kann G2 nicht optimiert werden.

Das erfindungsgemäße Verfahren ermöglicht besonders bei der Verwendung mehrkomponentiger Variablen mit einem hohen Speicherverbrauch, die beispielsweise bei der Modellierung von Bussen auftreten, eine deutliche Verringerung des Speicherbedarfs und der ansonsten für das Umkopieren benötigten Ausführungszeit.

## Patentansprüche

1. Computerimplementiertes Verfahren zum Erzeugen von Quellcode aus einem oder mehreren Blöcken eines Blockdiagramms, welches mindestens zwei nichtvirtuelle Blöcke, also Verarbeitungsblöcke, die einen Ausgangswert berechnen und/oder eine Zuweisung zumindest an Teile eines Signal vornehmen, und mindestens eine Signalverbindung zwischen zwei nichtvirtuellen Blöcken umfasst, wobei das Erzeugen von Quellcode ein Transformieren (S2) des Blockdiagramms in eine Zwischendarstellung, ein sukzessives Optimieren (S8) der Zwischendarstellung und ein Übersetzen (S9) der optimierten Zwischendarstellung in Quellcode umfasst, wobei das Transformieren (S2) eines nichtvirtuellen Blocks das Erstellen eines Bezugs auf eine Blockausgangsvariable umfasst, **dadurch gekennzeichnet, dass** das Transformieren (S2) für einen ersten Block mit einem Zugriff auf eine mehrkomponentige Variable eine Prüfung (S4) daraufhin umfasst, ob ein Blockpaar aus diesem Block und einem benachbarten Block eine wertgleiche Zuweisung umfasst, wobei die mehrkomponentige Variable ein Vektor, der eine Vielzahl von Variablen desselben Datentyps umfasst, eine Matrix, die eine Vielzahl von Vektoren umfasst, eine Struktur, die eine Vielzahl von Variablen beliebigen Datentyps umfasst, oder ein Vektor von Strukturen oder eine Matrix von Strukturen ist, wobei das Blockpaar je nach Typ des ersten Blocks entweder aus dem ersten Block und dessen Vorgänger oder aus dem ersten Block und dessen Nachfolger besteht, wobei eine wertgleiche Zuweisung dann vorliegt, wenn zumindest ein Teil der mehrkomponentigen Variable eines Blocks des Blockpaars unverändert in einen Teil der mehrkomponentigen Variable des anderen Blocks des Blockpaars kopiert wird, wobei bei Vorliegen einer wertgleichen Zuweisung eine Ersetzung (S6) von Variablenbezügen erfolgt, bei der entweder ein Bezug auf den Teil der Variable des einen Blocks des Blockpaars durch einen Bezug auf den entsprechenden Teil der Variable des anderen Blocks des Blockpaars ersetzt wird oder der Bezug auf eine Ausgangsvariable des ersten Blocks durch den Bezug auf eine Datenspeicher-Variable ersetzt wird, und wobei das Transformieren ein Entfernen (S7) solcher Zuweisungen umfasst, bei denen auf beiden Seiten ein Bezug auf dieselbe Variable steht, wobei trotz Vorliegens einer wertgleichen Zuweisung zwischen einer ersten Variable und einer zweiten Variable eines Blockpaars kein Ersetzen (S6) eines Bezugs auf die erste Variable durch einen Bezug auf die zweite Variable erfolgt, wenn einer oder mehrere der im folgenden genannten Ausschlussgründe (S5) vorliegen, wobei im Fall einer nur für Anteile der ersten und der zweiten Variablen bestehenden wertgleiche Zuweisung auch nur diese Anteile bei den Ausschlussgründen (S5) betrachtet werden:
• Die erste und die zweite Variable haben eine unterschiedliche Dimension,
• Mindestens ein Element der ersten Variablen hat einen anderen Datentyp als das korrespondierende Element der zweiten Variablen,
• Die erste Variable ist als notwendig spezifiziert,
• Durch Signalflussabzweigung und/oder Ausführungsreihenfolge der verbundenen Blöcke liegt ein unvorhersagbarer Datenfluss vor.

2. Verfahren nach Anspruch 1, **dadurch gekennzeichnet, dass** einer oder mehrere der folgende Blocktypen auf eine wertgleiche Zuweisung geprüft werden, ein DataStore-Read-Block, der aus einer Datenspeicher-Variablen liest, ein DataStore-Write-Block, der in eine Datenspeicher-Variable schreibt, ein Switch-Block, der einen Ausgang mit einem von mehreren Eingängen selektiv verbindet, ein Bus-Outport-Block, der eine Ausgabe an einen Bus modelliert, ein Outport-Block, der eine Ausgabe modelliert, und/oder ein Delay-Block, der ein Eingangssignal um einen Zeitschritt verzögert wieder ausgibt, wobei im Falle eines DataStore-Read-Blocks dieser zusammen mit dem Folgeblock betrachtet wird, und bei Vorliegen einer wertgleichen Zuweisung ein Bezug auf eine Ausgangsvariable des DataStore-Read-Blocks durch einen Bezug auf den entsprechenden Teil der Datenspeicher-Variable ersetzt wird, und/oder im Falle eines DataStore-Write-Blocks, Switch-Blocks, Bus-Outport-Blocks, Outport-Blocks und/oder Delay-Blocks dieser zusammen mit dem Vorgängerblock betrachtet wird, und bei Vorliegen einer wertgleichen Zuweisung ein Bezug auf eine Ausgangsvariable des Vorgängerblocks durch einen Bezug auf eine Variable des ersten Blocks ersetzt wird.

3. Verfahren nach einem der vorhergehenden Ansprüche, **dadurch gekennzeichnet, dass** Blockdiagramme hierarchisch definiert sind, wobei ein Block in einer höheren Ebene mehrere Blöcke einer untergeordneten Ebene umfassen kann, wobei Blöcke einer untergeordneten Ebene einem Block einer höheren Ebene zugeordnet sind, und dass wenn ein DataStore-Read-Block auf eine wertgleiche Zuweisung geprüft wird, in einem umfassenden hierarchischen Block, insbesondere atomaren hierarchischen Block, nach DataStore-Write-Blöcken gesucht wird, die auf dieselbe Datenspeicher-Variable zugreifen.

4. Verfahren nach Anspruch 3, **dadurch gekennzeichnet, dass** sofern ein DataStore-Read-Block und ein DataStore-Write-Block mit Zugriff auf dieselbe Datenspeicher-Variable in dem umfassenden hierarchischen Block gefunden wurden, überprüft wird, ob der DataStore-Read-Block und der DataStore-Write-Block zumindest teilweise im Signalfluss verbunden sind, so dass der Teil der Datenspeicher-Variablen, welcher im DataStore-Read-Block gelesen wird, eine nichtleere Schnittmenge aufweist mit dem Teil der Datenspeicher-Variablen, welcher im DataStore-Write-Block geschrieben wird, wobei mindestens ein Blockim Signalfluss zwischen dem DataStore-Read-Block und dem DataStore-Write-Block liegt, wobei der oder die dazwischen liegenden Blöcke mindestens einen nichtvirtuellen Verarbeitungsblock umfassen, der eine Eingangsvariable verarbeitet, um eine Ausgangsvariable zu erzeugen, und dass als eine Zusatzbedingung überprüft wird, ob der oder die dazwischen liegenden Blöcke eine solche Abarbeitungsreihenfolge aufweisen, dass der mindestens eine Verarbeitungsblock vor dem Data-Store-Write-Block ausgeführt wird, und wenn diese Zusatzbedingung erfüllt ist, der der Schnittmenge entsprechende Anteil der Ausgangsvariable des DataStore-Read-Blocks durch den der Schnittmenge entsprechenden Anteil der Datenspeicher-Variablen ersetzt wird.

5. Verfahren nach einem der Ansprüche 3 bis 4, **dadurch gekennzeichnet, dass** wenn die Zusatzbedingung zunächst nicht erfüllt ist, die Abarbeitungsreihenfolge mindestens eines der dazwischenliegenden Blöcke geändert wird, um die Zusatzbedingung zu erfüllen.

6. Verfahren nach einem der Ansprüche 3 bis 5, **dadurch gekennzeichnet, dass** sofern ein DataStore-Read-Block und ein DataStore-Write-Block mit Zugriff auf dieselbe Datenspeicher-Variable in dem umfassenden hierarchischen Block gefunden wurden, überprüft wird, ob der DataStore-Read-Block und der DataStore-Write-Block zumindest teilweise im Signalfluss verbunden sind, so dass der Teil der Datenspeicher-Variablen, welcher im DataStore-Read-Block gelesen wird, eine nichtleere Schnittmenge aufweist mit dem Teil der Datenspeicher-Variablen, welcher im DataStore-Write-Block geschrieben wird, wobei mindestens ein Blockim Signalfluss zwischen dem DataStore-Read-Block und dem DataStore-Write-Block liegt, wobei der oder die dazwischen liegenden Blöcke mindestens einen nichtvirtuellen Verarbeitungsblock umfasst, der eine Eingangsvariable verarbeitet, um eine Ausgangsvariable zu erzeugen, und dass in diesem Fall für einen Vorgängerblock des DataStore-Write-Blocks, nämlich den dem DataStore-Write-Block im Signalfluss nächstliegenden Verarbeitungsblock, als Zusatzbedingungen überprüft wird, ob der der Schnittmenge entsprechende Anteil des Blockausgangs des Vorgängerblocks ohne Signalflussabzweigung mit dem DataStore-Write-Block verbunden ist, und ob die Blockausgangsvariable des Vorgängerblocks von Dimension und Datentyp mit der zumindest teilweisen Verbindung im Signalfluss übereinstimmt, wobei wenn diese Zusatzbedingungen erfüllt sind, die Blockausgangsvariable des Vorgängerblocks durch den der Schnittmenge entsprechenden Anteil der Datenspeicher-Variablen ersetzt wird.

7. Verfahren nach einem der vorhergehenden Ansprüche, **dadurch gekennzeichnet, dass** Blockdiagramme hierarchisch definiert sind, wobei ein Block in einer höheren Ebene mehrere Blöcke einer untergeordneten Ebene umfassen kann, wobei Blöcke einer untergeordneten Ebene einem Block einer höheren Ebene zugeordnet sind, und dass wenn ein erster DataStore-Write-Block auf eine wertgleiche Zuweisung geprüft wird, in einem umfassenden hierarchischen Block, insbesondere atomaren hierarchischen Block, nach weiteren DataStore-Write-Blöcken gesucht wird, die auf dieselbe Datenspeicher-Variable zugreifen, und dass als ein Ausschlussgrund der Ersetzung von Bezügen auf Variablen im Blockpaar des ersten DataStore-Write-Blocks für jeden gefundenen weiteren DataStore-Write-Block überprüft wird, ob dieser auf einen auch von dem ersten DataStore-Write-Block beschriebenen Teil der Datenspeicher-Variablen schreibt, wobei trotz Vorliegens einer wertgleichen Zuweisung kein Ersetzen eines Bezugs auf die Ausgangsvariable des Vorgängerblocks durch einen Bezug auf den von dem ersten DataStore-Write-Block beschriebenen Teil der Datenspeicher-Variablen erfolgt, wenn der Ausschlussgrund vorliegt.

8. Verfahren nach einem der vorhergehenden Ansprüche, **dadurch gekennzeichnet, dass** Variablen als Zustände spezifiziert sein können, welche die Ausgangswerte des folgenden Zeitschritts beeinflussen, wobei auch bei Vorliegen einer wertgleichen Zuweisung zwischen einer ersten Variablen und einer zweiten Variablen eines Blockpaars nur dann ein Ersetzen (S6) eines Bezugs auf die erste Variable durch einen Bezug auf die zweite Variable erfolgt, wenn die erste Variable nicht als Zustand spezifiziert ist und/oder die zweite Variable als Zustand spezifiziert ist.

9. Verfahren nach einem der vorhergehenden Ansprüche, **dadurch gekennzeichnet, dass** Blockdiagramme hierarchisch definiert sind, wobei ein Block in einer höheren Ebene mehrere Blöcke einer untergeordneten Ebene umfassen kann, wobei Blöcke einer untergeordneten Ebene einem Block einer höheren Ebene zugeordnet sind, wobei alle Blöcke auf der Ebene des ersten Blocks und alle diesen Blöcken zugeordneten Blöcke auf das Vorliegen eines Ausschlussgrundes (überprüft werden.

10. Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Einlesen eines Blockdiagramms,
b. Erzeugen eines Quellcodes mit einem Verfahren nach einem der vorhergehenden Ansprüche,
c. Kompilieren des Quellcodes für die Recheneinheit, so dass ein ausführbarer Code erzeugt wird,
d. Übertragen des ausführbaren Codes auf das Steuergerät, und
e. Hinterlegen des ausführbaren Codes auf einem nichtflüchtigen Speicher des Steuergeräts und/oder Ausführen des ausführbaren Codes durch die Recheneinheit des Steuergeräts.

11. Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein Verfahren gemäß einem der vorhergehenden Ansprüche auszuführen.

12. Computersystem umfassend eine Mensch-Maschine-Schnittstelle, einen nichtflüchtigen Speicher und einen Prozessor, wobei der Prozessor dazu eingerichtet ist, ein Verfahren nach einem der vorhergehenden Ansprüche auszuführen.

## Claims

1. A computer-implemented method for generating source code from one or more blocks of a block diagram comprising at least two non-virtual blocks, i.e., processing blocks, for calculating an output value and/or for making an assignment to at least parts of a signal, and at least one signal connection between two non-virtual blocks, the generating of source code comprising a transformation (S2) of the block diagram into an intermediate representation, a successive optimization (S8) of the intermediate representation, and a translation (S9) of the optimized intermediate representation into source code, the transformation (S2) of a non-virtual block comprising creating a reference to a block output variable, **characterized in that**, for a first block having an access to a multicomponent variable, the transforming (S2) comprises checking (S4) whether a pair of blocks comprising said block and an adjacent block comprises an equal-value assignment, wherein the multicomponent variable is a vector comprising a plurality of variables of the same data type, a matrix comprising a plurality of vectors, a structure comprising a plurality of variables of any data type, or a vector of structures or a matrix of structures, wherein the pair of blocks consists either of the first block and the predecessor thereof or of the first block and the successor thereof, depending on the type of the first block, wherein an equal-value assignment is present if at least a part of the multi-component variable of one block of the block pair is copied unchanged into a part of the multi-component variable of the other block of the block pair, wherein a replacement (S6) of variable references takes place if an equal-value assignment is present, in which either a reference to the part of the variable of the one block of the block pair is replaced by a reference to the corresponding part of the variable of the other block of the block pair or the reference to an output variable of the first block is replaced by the reference to a data memory variable and wherein the transforming comprises a removal (S7) of such assignments in which there is a reference to the same variable on both sides, wherein, despite the presence of an equal-value assignment between a first variable and a second variable of a block pair, no replacement (S6) of a reference to the first variable by a reference to the second variable takes place if one or more of the reasons for exclusion (S5) mentioned below are present, wherein, in the case of an equal-value assignment existing only for portions of the first and second variables, only said portions are also considered in the reasons for exclusion (S5):
• the first and second variables have a different dimension,
• at least one element of the first variables has a different data type than the corresponding element of the second variables,
• the first variable is specified as necessary,
• the signal flow branching and/or execution sequence of the connected blocks results in an unpredictable data flow.

2. The method according to claim 1, **characterized in that** one or more of the following block types are checked for an equal-value assignment: a DataStore read block for reading from a data memory variable, a DataStore write block for writing to a data memory variable, a switch block for selectively connecting an output to one of a plurality of inputs, a bus outport block for modeling an output to a bus, an outport block for modeling an output, and/or a delay block for outputting an input signal delayed by one time step, wherein in the case of a DataStore read block said block is considered together with the subsequent block, and in the presence of an equal-value assignment a reference to an output variable of the DataStore read block is replaced by a reference to the corresponding part of the data memory variable, and/or in the case of a DataStore write block, switch block, bus outport block, outport block and/or delay block said block is considered together with the predecessor block, and if an equal-value assignment is present, a reference to an output variable of the predecessor block is replaced by a reference to a variable of the first block.

3. The method according to any one of the preceding claims, **characterized in that** block diagrams are defined hierarchically, wherein a block in a higher level may comprise several blocks of a subordinate level, wherein blocks of a subordinate level are assigned to a block of a higher level, and **in that** when a DataStore read block is checked for an equal-value assignment, a search is made in a global hierarchical block, in particular an atomic hierarchical block, for DataStore write blocks for accessing the same data memory variable.

4. The method according to claim 3, **characterized in that**, if a DataStore read block and a DataStore write block having access to the same data memory variable have been found in the global hierarchical block, it is checked whether the DataStore read block and the DataStore write block are at least partially connected in the signal flow, so that the part of the data memory variables being read in the DataStore read block has a non-empty intersection with the part of the data memory variables which is written in the DataStore write block, wherein at least one block in the signal flow is between the DataStore read block and the DataStore write block, wherein the one or more intervening blocks comprise at least one non-virtual processing block for processing an input variable to generate an output variable, and that as an additional condition it is checked whether the one or more intervening blocks have a processing order such that the at least one processing block is executed before the DataStore write block, and if said additional condition is fulfilled, the portion of the output variable of the DataStore read block corresponding to the intersection is replaced by the portion of the data memory variables corresponding to the intersection.

5. The method according to any one of claims 3 to 4, **characterized in that** if the additional condition is initially not fulfilled, the processing sequence of at least one of the intervening blocks is changed in order to fulfil the additional condition.

6. The method according to any one of claims 3 to 5, **characterized in that** if a DataStore read block and a DataStore write block having access to the same data memory variable have been found in the global hierarchical block, it is checked whether the DataStore read block and the DataStore write block are at least partially connected in the signal flow, such that the portion of the data memory variables being read in the DataStore read block has a non-empty intersection with the portion of the data memory variables being written in the DataStore write block, wherein at least one block in the signal flow lies between the DataStore read block and the DataStore write block, wherein the intervening block or blocks comprises at least one non-virtual processing block for processing an input variable to generate an output variable, and that in this case it is checked, as additional conditions for a predecessor block of the DataStore write block, namely the processing block closest to the DataStore write block in the signal flow, whether the portion of the block output of the predecessor block corresponding to the intersection without a signal flow branch is connected to the DataStore write block, and whether the block output variable of the predecessor block corresponds in dimension and data type to the at least partial connection in the signal flow, wherein if said additional conditions are fulfilled, the block output variable of the predecessor block is replaced by the portion of the data memory variables corresponding to the intersection.

7. The method according to any one of the preceding claims, **characterized in that** block diagrams are defined hierarchically, wherein a block in a higher level may comprise a plurality of blocks of a subordinate level, wherein blocks of a subordinate level are assigned to a block of a higher level, and **in that** when a first DataStore write block is checked for an equal-value assignment, a search is made in a global hierarchical block, in particular an atomic hierarchical block, for further DataStore write blocks accessing the same data memory variable, and **in that**, as a reason for excluding the replacement of references to variables in the block pair of the first DataStore write block, a check is made for each further DataStore write block found as to whether said block writes to a part of the data memory variables also written to by the first DataStore write block, wherein no replacement of a reference to the output variable of the predecessor block by a reference to the part of the data memory variables written to by the first DataStore write block takes place despite the presence of an equal-value assignment if the reason for exclusion is present.

8. The method according to any one of the preceding claims, **characterized in that** variables may be specified as states for influencing the output values of the following time step, wherein even if there is an equal-value assignment between a first variable and a second variable of a block pair, a reference to the first variable is replaced (56) by a reference to the second variable only if the first variable is not specified as a state and/or the second variable is specified as a state.

9. The method according to any one of the preceding claims, **characterized in that** block diagrams are defined hierarchically, wherein a block in a higher level may comprise a plurality of blocks of a subordinate level, wherein blocks of a subordinate level are assigned to a block of a higher level, wherein all blocks at the level of the first block and all blocks assigned to said blocks are checked for the presence of a reason for exclusion.

10. A method for configuring a control device, wherein the control device comprises at least one processing unit and preferably comprises at least one sensor and/or at least one actuator for capturing data of a physical process and/or for acting on the same, the method comprising the steps:
a.reading in a block diagram,
b.generating a source code by means of a method according to any one of the preceding claims,
c.compiling the source code for the processing unit so that an executable code is generated,
d.transferring the executable code to the control device, and
e.saving the executable code in a non-volatile memory of the control device and/or executing the executable code by the processing unit of the control device.

11. A computer program product having a computer-readable memory medium in which commands are embedded which, when executed by a processor, cause the processor to be configured to perform a method according to any one of the preceding claims.

12. A computer system comprising a human-machine interface, a non-volatile memory, and a processor, wherein the processor is configured to execute a method according to any one of the preceding claims.

## Revendications

1. Procédé mis en œuvre sur ordinateur pour générer un code source à partir d'un ou de plusieurs blocs d'un schéma fonctionnel qui comprend au moins deux blocs non virtuels, c'est-à-dire des blocs de traitement qui calculent une valeur de sortie et/ou effectuent une affectation à au moins des parties d'un signal, et au moins une connexion de signal entre deux blocs non virtuels, la génération de code source comprenant une transformation (S2) du schéma fonctionnel en une représentation intermédiaire, une optimisation successive (S8) de la représentation intermédiaire et une traduction (S9) de la représentation intermédiaire optimisée en code source, la transformation (S2) d'un bloc non virtuel comprenant la création d'une référence à une variable de sortie de bloc, **caractérisé en ce que** la transformation (S2) comprend, pour un premier bloc ayant un accès à une variable à plusieurs composantes, une vérification (S4) visant à déterminer si une paire de blocs issue de ce bloc et d'un bloc adjacent comprend une affectation de valeur égale, la variable à plusieurs composantes étant un vecteur qui comprend une pluralité de variables du même type de données, une matrice qui comprend une pluralité de vecteurs, une structure qui comprend une pluralité de variables d'un type de données quelconque ou un vecteur de structures ou une matrice de structures, la paire de blocs étant constituée, selon le type du premier bloc, soit du premier bloc et de son prédécesseur, soit du premier bloc et de son successeur, une affectation de valeur égale étant présente lorsqu'au moins une partie de la variable à plusieurs composantes d'un bloc de la paire de blocs est copiée inchangée dans une partie de la variable à plusieurs composantes de l'autre bloc de la paire de blocs, un remplacement (S6) de références aux variables étant effectué en cas d'existence d'une affectation de valeur égale, avec lequel soit une référence à la partie de la variable d'un bloc de la paire de blocs est remplacée par une référence à la partie correspondante de la variable de l'autre bloc de la paire de blocs, soit la référence à une variable de sortie du premier bloc est remplacée par la référence à une variable de mémoire de données et la transformation comprenant une suppression (S7) des affectations pour lesquelles il existe des deux côtés une référence à la même variable, aucun remplacement (S6) d'une référence à la première variable par une référence à la deuxième variable n'étant effectué malgré la présence d'une affectation de valeur égale entre une première variable et une deuxième variable d'une paire de blocs si un ou plusieurs des motifs d'exclusion (S5) indiqués ci-après sont présents, dans le cas d'une affectation de valeur égale existant uniquement pour des parties de la première variable et de la deuxième variable, seules ces parties étant également prises en compte dans les motifs d'exclusion (S5):
• la première et la deuxième variable ont une dimension différente,
• au moins un élément de la première variable a un type de données différent de l'élément correspondant de la deuxième variable,
• la première variable est spécifiée comme nécessaire,
• un flux de données imprévisible est présent en raison de la dérivation du flux de signaux et/ou de l'ordre d'exécution des blocs connectés.

2. Procédé selon la revendication 1, **caractérisé en ce qu'**un ou plusieurs des types de blocs suivants sont vérifiés en ce qui concerne une affectation de valeur égale, un bloc DataStore-Read, qui lit à partir d'une variable de mémoire de données, un bloc DataStore-Write, qui écrit dans une variable de mémoire de données, un bloc Switch, qui relie sélectivement une sortie à l'une de plusieurs entrées, un bloc Bus-Outport, qui modélise une sortie vers un bus, un bloc Outport, qui modélise une sortie et/ou un bloc Delay, qui délivre de nouveau en sortie un signal d'entrée retardé d'un pas de temps, dans le cas d'un bloc DataStore-Read, celui-ci étant pris en compte avec le bloc suivant et, en cas de présence d'une affectation de valeur égale, une référence à une variable de sortie du bloc DataStore-Read étant remplacée par une référence à la partie correspondante de la variable de mémoire de données, et/ou dans le cas d'un bloc DataStore-Write, d'un bloc Switch, d'un bloc Bus-Outport, d'un bloc Outport et/ou d'un bloc Delay, celui-ci est pris en compte avec le bloc précédent et, en cas de présence d'une affectation de valeur égale, une référence à une variable de sortie du bloc précédent est remplacée par une référence à une variable du premier bloc.

3. Procédé selon l'une des revendications précédentes, **caractérisé en ce que** des schémas fonctionnels sont définis de manière hiérarchique, un bloc dans un niveau supérieur pouvant comprendre plusieurs blocs d'un niveau inférieur, des blocs d'un niveau inférieur étant associés à un bloc d'un niveau supérieur, et **en ce que** lorsqu'un bloc DataStore-Read est vérifié en ce qui concerne une affectation de valeur égale, des blocs DataStore-Write qui accèdent à la même variable de mémoire de données sont recherchés dans un bloc hiérarchique global, en particulier un bloc hiérarchique atomique.

4. Procédé selon la revendication 3, **caractérisé en ce que**, dans la mesure où un bloc DataStore-Read et un bloc DataStore-Write ayant accès à la même variable de mémoire de données ont été trouvés dans le bloc hiérarchique global, il est vérifié si le bloc DataStore-Read et le bloc DataStore-Write sont au moins partiellement reliés dans le flux de signaux, de sorte que la partie de la variable de mémoire de données qui est lue dans le bloc DataStore-Read présente un recoupement non vide avec la partie de la variable de mémoire de données qui est écrite dans le bloc DataStore-Write, au moins un bloc étant situé dans le flux de signaux entre le bloc DataStore-Read et le bloc DataStore-Write, le ou les blocs intermédiaires comprenant au moins un bloc de traitement non virtuel qui traite une variable d'entrée afin de générer une variable de sortie, et **en ce qu'**il est vérifié en tant qu'une condition supplémentaire, si le ou les blocs intermédiaires présentent un ordre de traitement tel que l'au moins un bloc de traitement soit exécuté avant le bloc Data-Store-Write, et si cette condition supplémentaire est remplie, la partie de la variable de sortie du bloc DataStore-Read correspondant au recoupement est remplacée par la partie de la variable de mémoire de données correspondant au recoupement.

5. Procédé selon l'une des revendications 3 à 4, **caractérisé en ce que**, si la condition supplémentaire n'est pas satisfaite dans un premier temps, l'ordre de traitement d'au moins l'un des blocs intermédiaires est modifié afin de satisfaire à la condition supplémentaire.

6. Procédé selon l'une des revendications 3 à 5, **caractérisé en ce que**, dans la mesure où un bloc DataStore-Read et un bloc DataStore-Write ayant accès à la même variable de mémoire de données ont été trouvés dans le bloc hiérarchique global, il est vérifié si le bloc DataStore-Read et le bloc DataStore-Write sont au moins partiellement reliés dans le flux de signaux, de sorte que la partie des variables de mémoire de données qui est lue dans le bloc DataStore-Read présente un recoupement non vide avec la partie des variables de mémoire de données qui est écrite dans le bloc DataStore-Write, au moins un bloc étant situé dans le flux de signaux entre le bloc DataStore-Read et le bloc DataStore-Write, le ou les blocs intermédiaires comprenant au moins un bloc de traitement non virtuel qui traite une variable d'entrée pour générer une variable de sortie, et **en ce que** dans ce cas, pour un bloc précédent du bloc DataStore-Write, à savoir le bloc de traitement le plus proche du bloc DataStore-Write dans le flux de signaux, il est vérifié en tant que conditions supplémentaires si la partie de la sortie de bloc du bloc précédent correspondant au recoupement est reliée au bloc DataStore-Write sans dérivation du flux de signaux, et si la variable de sortie de bloc du bloc précédent concorde en termes de dimension et de type de données avec la connexion au moins partielle dans le flux de signaux, la variable de sortie de bloc du bloc précédent étant remplacée par la partie de la variable de mémoire de données correspondant au recoupement si ces conditions supplémentaires sont remplies.

7. Procédé selon l'une des revendications précédentes,
**caractérisé en ce que** des schémas fonctionnels sont définis de manière hiérarchique, un bloc d'un niveau supérieur pouvant comprendre plusieurs blocs d'un niveau inférieur, des blocs d'un niveau inférieur étant associés à un bloc d'un niveau supérieur, et **en ce que**, lorsqu'un premier bloc DataStore-Write est vérifié en ce qui concerne une affectation de valeur égale, des blocs DataStore-Write supplémentaires qui accèdent à la même variable de mémoire de données sont recherchés dans un bloc hiérarchique global, en particulier un bloc hiérarchique atomique, et **en ce qu'**il est vérifié, en tant qu'un motif d'exclusion du remplacement de références à des variables dans la paire de blocs du premier bloc DataStore-Write pour chaque bloc DataStore-Write supplémentaire trouvé, si celui-ci écrit sur une partie de la variable de mémoire de données sur laquelle écrit également le premier bloc DataStore-Write, aucun remplacement d'une référence à la variable de sortie du bloc précédent par une référence à la partie des variables de mémoire de données écrite par le premier bloc DataStore-Write n'ayant lieu malgré la présence d'une affectation de valeur égale si le motif d'exclusion existe.

8. Procédé selon l'une des revendications précédentes,
**caractérisé en ce que** des variables peuvent être spécifiées en tant qu'états qui influencent les valeurs de sortie du pas de temps suivant, un remplacement (S6) d'une référence à la première variable par une référence à la deuxième variable n'étant effectué, même en présence d'une affectation de valeur égale entre une première variable et une deuxième variable d'une paire de blocs, que si la première variable n'est pas spécifiée en tant qu'état et/ou la deuxième variable est spécifiée en tant qu'état.

9. Procédé selon l'une des revendications précédentes,
**caractérisé en ce que** des schémas fonctionnels sont définis de manière hiérarchique, un bloc d'un niveau supérieur pouvant comprendre plusieurs blocs d'un niveau inférieur, des blocs d'un niveau inférieur étant associés à un bloc d'un niveau supérieur, tous les blocs au niveau du premier bloc et tous les blocs associés à ces blocs étant vérifiés quant à la présence d'un motif d'exclusion.

10. Procédé pour configurer un appareil de commande, l'appareil de commande comprenant au moins une unité de calcul et possédant de préférence au moins un capteur et/ou au moins un actionneur, afin d'acquérir des données d'un processus physique et/ou d'agir sur celui-ci, le procédé comprenant les étapes suivantes :
a.lecture d'un schéma fonctionnel,
b.génération d'un code source à l'aide d'un procédé selon l'une des revendications précédentes,
c.compilation du code source pour l'unité de calcul, de manière à générer un code exécutable,
d.transfert du code exécutable à l'appareil de commande, et
e.stockage du code exécutable dans une mémoire non volatile de l'appareil de commande et/ou exécution du code exécutable par l'unité de calcul de l'appareil de commande.

11. Produit de programme informatique avec un support de stockage lisible par ordinateur sur lequel sont incorporées des instructions qui, lorsqu'elles sont exécutées par un processeur, ont pour effet que le processeur est conçu pour mettre en œuvre un procédé selon l'une des revendications précédentes.

12. Système informatique comprenant une interface homme-machine, une mémoire non volatile et un processeur, le processeur étant conçu pour mettre en œuvre un procédé selon l'une des revendications précédentes.
